# EUROPÄISCHE PATENTSCHRIFT

(11) **EP 3 840 970 B1**
(45) Veröffentlichungstag und Bekanntmachung des Hinweises auf die Patenterteilung: **28.06.2023**
(21) Anmeldenummer: 19768702.3
(22) Anmeldetag: 20.08.2019
(51) Int. Cl.: B60J 7/06

(54) **ÖFFENBARER AUFBAU**
OPENABLE STRUCTURE
STRUCTURE POUVANT ÊTRE OUVERTE

(30) Priorität: 20.08.2018 DE 202018104786 U
(43) Veröffentlichungstag der Anmeldung: 30.06.2021
(73) Patentinhaber: European Trailer Systems GmbH, 47441 Moers (DE)
(72) Erfinder: LEUKERS, Markus, 47546 Kalkar (DE); REMMEL, Roger, 42897 Remscheid (DE)
(74) Vertreter: IPrime Bonnekamp Sparing Patentanwaltsgesellschaft mbH
(86) Internationale Anmeldenummer: PCT/DE2019/100752
(87) Internationale Veröffentlichungsnummer: WO 2020/038531

(56) Entgegenhaltungen:
- FR-A1- 2 480 203
- FR-A1- 2 505 904
- GB-A- 1 545 196
- JP-A- S59 186 734
- LU-A1- 81 931

## Beschreibung

Die Erfindung betrifft einen öffenbaren Aufbau, beispielsweise einen Planenaufbau, für einen Unterbau, wie ein selbstfahrendes Kraftfahrzeug, einen Lastkraftwagen, einen Auflieger, einen Anhänger, einen Container, eine Kippmulde, einen Bahnwaggon, ein Gebäude oder dergleichen, umfassend ein zusammenfaltbares Verdeckgestell, eine an dem Verdeckgestell anschließbare Abdeckung, insbesondere eine Plane, und einen Antrieb zum Ein- und/oder Ausfalten des Verdeckgestells, wobei der Antrieb wenigstens ein zumindest zugsteifes Zugelement zu einer Bewegung veranlasst, wobei das wenigstens eine zumindest zugsteife Zugelement mit einem distalen Schlitten eines Verdeckgestells koppelbar ist und den Schlitten in Abhängigkeit von einer Betätigungsrichtung des Antriebs vor und/oder zurück bewegt.

Aus der Praxis sind Planenaufbauten für Unterbauten bekannt, die einen Antrieb aufweisen, mit dem das Verdeckgestell ein- oder ausgefaltet werden kann, wobei der Antrieb über ein als Seil oder Draht ausgebildetes zumindest zugsteifes Zugelement eine Bewegung auf einen oder mehrere Schlitten des Verdeckgestells überträgt. Die Kraft für den Antrieb wird in der Regel durch einen Motor, der das Zugelement schleppt, auf die Schlitten übertragen, wobei der Motor aufgrund der großen auftretenden Kräfte mit einer eigenen Energieversorgung im Bereich des Unterbaus verbunden ist. Nachteilig ist hierbei, dass Platz für die Energieversorgung verloren geht und dass die Energieversorgung regelmäßig auch wieder geladen werden muss. Des Weiteren ist es erforderlich, den Antrieb für relativ große Belastungen auszulegen, da die Kraft des Antriebs auch benötigt wird, um die verlagerbaren Teile des Verdeckgestells in einer geöffneten Position zu halten, wenn die Kippmulde abgekippt wird. Hierdurch tritt ein hoher Energieverbrauch ein, und häufig sind die im Leitungsnetz fließenden Stromstärken so hoch, dass die entsprechende Leistungsaufnahme nicht mehr abgesichert ist. Insbesondere funktionieren die bekannten Antriebe nicht mehr zuverlässig, wenn der Unterbau nicht auf einer ebenen Fläche steht, sondern am Berg oder schräg mit einer Seite auf dem Bürgersteig. Besonders energieaufwändig sind die bekannten Antriebe, wenn die beweglichen Teile des Verdeckgestells insgesamt geöffnet werden, und die letzten Wegstücke des Schlittens gegen einen entsprechenden Widerstand verfahren werden müssen. Schließlich sind die bekannten Antriebe nicht ausreichend flexibel, um Belastungsspitzen, die beispielsweise beim Zusammenfalten von Planenfalthilfen entstehen, zuverlässig zu überwinden.

WO 96 33 882 A1 zeigt einen öffenbaren Aufbau für einen Unterbau, umfassend ein zusammenfaltbares Verdeckgestell mit einer Mehrzahl von Spriegeln, an die eine Abdeckung in Gestalt einer Plane anschließbar ist, wobei ein manueller Antrieb ein einzelnes Zugseil als Zugelement zu einer Bewegung veranlasst. Hierbei ist das wenigstens eine zumindest zugsteifes Zugelement als endloses Kabel ausgebildet und ist mit den beiden distalen Endstücken der Spriegel, die jeweils in einer U-förmigen Führung hin und her verschiebbar sind, gekoppelt, wobei die Kopplung ein distales Endstück über entsprechende Klampen an dem Kabel örtlich fixiert. Der entsprechende distale Spriegel wird hierbei abhängig von einer Betätigungsrichtung des Antriebs vor- und/oder zurückbewegt, wobei durch die endlose Ausgestaltung des Kabels ein etwaiger Schlupf in den Rollen nicht zu einem Verkanten der Spriegel führt. Der Antrieb umfasst hierbei eine Antriebsrolle, die mit der Kurbel starr verbunden ist und entsprechend in die eine oder in die andere Richtung angetrieben werden kann.

US 3 964 781A beschreibt einen öffenbaren Aufbau für einen Unterbau, umfassend eine zusammenfaltbare Plane, die auf einem den Unterbau nach oben begrenzenden starren Gestell verschiebbar ist, wobei an jeder Längsseite jeweils ein endloses Kabel vorgesehen ist, das mit der Plane verbunden ist, wobei im Frontbereich des Unterbaus eine motorisch oder manuell angetriebene Welle vorgesehen ist, die mit einer Rolle, auf der das Kabel umläuft, gekoppelt ist. Das Kabel wird eineinhalb Mal über die vordere Rolle gelegt, und einmal um 180° um eine hintere Umlenkrolle. Die vorderen Rollen an beiden Längsseiten sind jeweils in Verlängerung der Welle vorgesehen.

Nachteilig bei dem bekannten Aufbau ist der Umstand, dass sich das Verdeckgestell nicht zusammenfalten lässt, und dass die beiden Antriebskabel auf den beiden Längsseiten des Unterbaus unabhängig voneinander endlos umlaufend ausgebildet sind, sodass im Falle eines Widerstands oder eines Schlupfes die beide Antriebskabel nicht mehr synchron laufen und entsprechend die Plane verkantet oder reißt. Durch die unmittelbare Verbindung der Plane mit dem Kabel ohne zwischengeschaltete Schlitten kommt es auch nicht zu einem Aufstellen der Plane, vielmehr wird diese ungesteuert zusammengefaltet.

DE 102 24 157 A1 beschreibt einen entlang paralleler Führungen verlagerbaren Deckel für das Schiebedach eines Personenfahrzeugs, bei dem ein elektromotorischer Antrieb mit einer Ausgangswelle gleichzeitig eine untere Wickelrolle und eine obere Wickelrolle antreibt, wobei ein als Antriebsseil ausgebildetes Zugelement, das mit einem Mitnehmer des Deckels gekoppelt ist, einen Ends mehrfach auf der unteren Wickeltrommel und anderen Ends mehrfach auf der oberen Wickeltrommel aufgewickelt ist, wobei das Antriebsseil über weitere Umlenkrollen geführt ist. Die Enden des Antriebsseils sind hierzu an den jeweiligen Wickeltrommeln festgelegt. Eine mittlere Wickeltrommel, die axial zwischen der unteren Wickeltrommel und der oberen Wickeltrommel angeordnet ist, und die auch mehrfach dem Antriebsseil umschlungen ist, ist frei drehbar gelagert und folgt der Wickelbewegung der unteren Wickeltrommel und der oberen Wickeltrommel, indem das Antriebsseil sich bewegt. Letztlich dient die eine Wickeltrommel dazu, den Deckel in die eine Richtung zu ziehen und die andere Wickeltrommel dazu, den Deckel in die andere Richtung zu ziehen.

DE 1 225 976 A beschreibt eine um eine Lagerzapfen verdrehbare Seiltrommel, die einen Zahnkranz aufweist, der mit einem ein Ritzel durchsetzenden Wellenzapfen für die Aufnahme einer Handkurbel ausgebildet ist, um die Seiltrommel in Bewegung zu setzen. An der Seiltrommel sind insgesamt zwei Zugseile mit ihrem Enden angeschlossen, wobei am Umfang der Seiltrommel entsprechend vier Seilrillen vorgesehen sind, die jedes der Enden der Zugseile aufnehmen, wenn die Seiltrommel verdreht wird. Die Seiltrommel dient zur Verlagerung eines Schiebedachs bei einem Kraftfahrzeug, wobei die maximale Verdrehung der Seiltrommel durch in eine Nut eingreifenden Zapfen begrenzt ist.

US 2015 018 84 81 A1 beschreibt einen öffenbaren Aufbau für einen Unterbau, umfassend zwei Planenabschnitte, die an einer in Längsrichtung verlaufenden Welle angeschlossen sind, wobei die Welle zum gemeinsamen Aufwickeln der beiden Planenabschnitte um ihre Achse drehbar und zusätzlich in Richtung auf eine der beiden Längsseiten des Planenaufbaus verlagerbar ist. Für die axiale Verlagerung und für die Drehbewegung ist jeweils ein separater Motor vorgesehen, wobei der einen Motor eine Trommel antreibt, auf die zwei Zugelemente, die jeweils mit einem Ende einer Stange, die den Planenabschnitt begrenzt, gekoppelt sind. Hierbei wird der von dem Motor zugeführte Strom erfasst, ebenso die Dauer der Stromzufuhr und bei Überschreiten eines Sicherheitszeitraums, in dem Schwellenwert der Stromaufnahme überschritten wird, die Stromzufuhr unterbrochen.

DE 10 2008 022 870 B3 beschreibt eine Vorrichtung zum Detektieren, ob ein elektromechanischer Sekundärantrieb für einen Fahrzeugflügel eines Personenfahrzeugs defekt ist. Hierzu wird ein Schwellenwert errechnet, der in Abhängigkeit von der Temperatur und einem Neigungswinkel als Begrenzungsstrom für einen elektrischen Primärantrieb errechnet wird, und eine Auswerteeinheit erfasst die Stromaufnahme des elektrischen Primärantriebs und erkennt bei Überschreiten des Schwellenwerts, dass der Sekundärantrieb defekt ist.

DE 10 2017 111 138 A1 beschreibt einen Personenfahrzeug mit einer schwenkbaren Ladeklappe, bei dem ein Aktuator mit einem Motor die Ladeklappe zwischen einer offenen Position und einer geschlossenen Position antreibt. Eine Steuerung ist vorgesehen, die in Abhängigkeit der Umgebungstemperatur, der Orientierung und der Richtung die Energie günstigsten Schließkräfte vorgibt.

JP S59 186734 A beschreibt einen öffenbaren Aufbau für einen als Auflieger ausgebildeten Unterbau, umfassend ein zusammenfaltbares Verdeckgestell und eine an das Verdeckgestell anschließbare Plane, wobei ein Antrieb zum Ein- und/oder Ausfalten des Verdeckgestells vorgesehen ist, der ein erstes zumindest zugsteifes Zugelement und ein zweites zumindest zugsteifes Zugelement zu einer Bewegung veranlasst. Das erste und das zweite zumindest zugsteife Zugelement ist jeweils mit einem distalen Schlitten des Verdeckgestells koppelbar ist bewegt jeweils einen der distalen Schlitten in Abhängigkeit von einer Betätigungsrichtung des Antriebs vor und/oder zurück. Der Antrieb umfasst einen angetriebenen ersten Rotationskörper und einen angetriebenen zweiten Rotationskörper, die auf einer gemeinsamen Achse angeordnet sind, wobei das erste zumindest zugsteifes Zugelement auf dem ersten Rotationskörper mehrfach vollständig umwickelt ist, während das zweite zumindest zugsteife Zugelement auf dem zweiten Rotationskörper mehrfach vollständig umwickelt ist, und jedes der beiden Zugelemente jeweils einen distalen Schlitten auf jeweils einer Seite des Verdeckgestells antreibt.

FR 2 505 904 A1 zeigt einen öffenbaren Aufbau für einen Sportplatz, umfassend mehrere gebogene Holme, die entlang bodenseitiger Schienen verlagerbar sind und an die eine Plane angeschlossen ist, sowie einen Antrieb zum Vor- oder Zurückbewegen der Holme, wobei der Antrieb zwei obere zugsteife Zugelemente und zwei untere zugsteife Zugelemente zu einer Bewegung veranlasst, wobei die unteren zumindest zugsteifen Zugelemente jeweils mit einem distalen Schlitten eines Holms koppelbar sind und diesen in Abhängigkeit von einer Betätigungsrichtung des Antriebs vor und/oder zurück bewegt. Der Antrieb umfasst einen ersten Rotationskörper und einen zweiten Rotationskörper, die als Trommel ausgebildet und auf derselben Achse angeordnet sind, wobei ein Ende der zugsteifen Zugelemente auf dem ersten Rotationskörper angeschlossen ist, während das andere Ende der zugsteifen Zugelemente auf dem zweiten Rotationskörper angeschlossen ist. Bei der Verlagerung der Holme werden so vier zugsteife Zugelemente von einer Trommel abgewickelt und auf die andere Trommel aufgewickelt.

DE 10 2012 106 804 A1 beschreibt eine Betätigungsvorrichtung für das Schiebedach eines Fahrzeugs, bei dem sowohl ein bewegbarer Deckel als auch eine bewegbare Sonnenblende mit nur einem Motor betätigt werden können, der hierzu ein Planetengetriebe vorsieht, in dessen verzahnte Räder elektromagnetisch betätigte Sperrstifte einrückbar sind.

US 4 203 174 A beschreibt eine öffenbare Abdeckung für ein Schwimmbecken, bei der eine Plane auf einer an einer Endseite des Schwimmbeckens angeordneten Walze aufgerollt und von dieser wieder abgerollt werden kann. An dem Ende der Plane ist ein Haltespriegel eingearbeitet, der an seinen beiden Enden mit jeweils einem umlaufenden Zugelement verbunden ist, welches über Umlenkrollen mit einer rotierbaren Scheibe, die auf einer Welle aufgebracht ist, geführt ist. Die Welle, die beide Scheiben antreibt, ist mit einer Kupplung, die über einen Riemen von einem Motor angetrieben wird, gekoppelt, wobei eine weitere Kupplung eine Welle, die die Plane aufwickelt, antreibt. Magnetschalter sind vorgesehen, die anzeigen, ob die Plane vollständig geöffnet oder vollständig geschlossen ist. Nachteilig bei der bekannten Einrichtung ist der Umstand, dass es in Folge von Schlupf oder Spiel auf einer der beiden Seiten zu einem Verkanten kommen kann.

Es ist die Aufgabe der Erfindung, einen öffenbaren Aufbau anzugeben, der das von einem Antrieb bewerkstelligte Ein- und/oder Ausfalten des Verdeckgestells verbessert.

Diese Aufgabe wird durch einen öffenbaren Aufbau mit den Merkmalen des unabhängigen Anspruchs 1 gelöst.

Gemäß einem Aspekt der Erfindung ist ein öffenbarer Aufbau für einen Unterbau, wie ein selbstfahrendes Lastfahrzeug, einen Lastkraftwagen, einen Auflieger, einen Anhänger, einen Container, eine Kippmulde, einen Bahnwaggon, ein Gebäude oder dergleichen geschaffen, der Aufbau umfassend ein zusammenfaltbares Verdeckgestell, eine an dem Verdeckgestell anschließbare Abdeckung, insbesondere eine Plane, und einen Antrieb zum Ein- und/oder Ausfalten des Verdeckgestells, wobei der Antrieb wenigstens ein zumindest zugsteifes Zugelement zu einer Bewegung veranlasst, wobei das wenigstens eine, zumindest zugsteife Zugelement mit einem distalen Schlitten des Verdeckgestells koppelbar ist und den Schlitten in Abhängigkeit von einer Betätigungsrichtung des Antriebs vor und/oder zurück bewegt. Der Aufbau zeichnet sich hierbei dadurch aus, dass der Antrieb einen angetriebenen ersten Rotationskörper umfasst, dass der Antrieb einen zweiten Rotationskörper umfasst, dass der erste und der zweite Rotationskörper zueinander benachbart angeordnet sind und eine Antriebseinrichtung bilden, und dass das wenigstens eine zumindest zugsteife Zugelement mehrfach um die aus erstem Zylinder und zweitem Zylinder gebildete Antriebseinrichtung gewickelt bzw. gelegt ist. Hierdurch wird vorteilhaft erreicht, dass die Kraft von dem angetriebenen ersten Rotationskörper auf das wenigstens eine zumindest zugsteife Zugelement übertragen wird, dass auch bei mehrfachem Hin- und Herverlagern der Schlitten das wenigstens eine zumindest zugsteife Zugelement nicht in Richtung der Achse des ersten Rotationskörper und/oder des zweiten Rotationskörper auswandert und sich dort verklemmt. Vielmehr wird die von dem angetriebenen ersten Rotationskörper auf das wenigstens eine zumindest zugsteife Zugelement übertragene Kraft zuverlässig auf den Schlitten des Verdeckgestells übertragen, sodass dieser präzise und reproduzierbar in verschiedene Öffnungsstellungen verlagert werden kann. Selbst wenn es bei der Übertragung von der Antriebseinrichtung auf das wenigstens eine zumindest zugsteife Zugelement zu einem Schlupf kommen sollte, nimmt der Antrieb insgesamt nur eine vergleichsweise geringe Leistung auf, sodass es möglich ist, den Antrieb an Nutzausgang einer Fahrzeugbatterie eines den Unterbau tragenden Fahrzeugs anzuschließen, sodass eine gesonderte Energieversorgung nicht notwendig ist.

Zweckmäßiger Weise ist vorgesehen, dass das wenigstens eine zugsteife Zugelement mehrfach um die Antriebseinrichtung, also um den ersten Rotationskörper und den zweiten Rotationskörper gewickelt ist. Hierbei wird weder der erste Rotationskörper noch der zweite Rotationskörper vollständig umwickelt, sondern die Umwicklung beträgt in etwa 180 Grad, sodass der Rotationskörper jeweils in etwa zur Hälfte umwickelt ist. Vorzugsweise ist die Anzahl der Umwicklungen ausgewählt zwischen zwei und acht, weiter bevorzugt zwischen drei und sechs, besonders günstig ist jedoch das vierfache Umwickeln der Antriebsvorrichtung.

Zweckmäßiger Weise wird der zweite Rotationskörper durch das eine zumindest zugsteife Zugelement angetrieben, wobei der erste Rotationskörper von dem Antrieb in Rotation versetzt wird. Der zweite Rotationskörper ist daher passiv beziehungsweise wird von dem ersten Rotationskörper mittels des wenigstens einen zumindest zugsteifen Zugelements geschleppt.

Gemäß einer günstigen Ausgestaltung ist vorgesehen, dass der erste Rotationskörper Umfangsnuten aufweist, in denen das wenigstens eine zumindest zugsteife Zugelement geführt ist. Die Umfangsnuten und insbesondere die die Umfangsnuten begrenzenden Stege stellen sicher, dass je nach Antriebsrichtung das wenigstens eine zumindest zugsteife Zugelement nicht axial auswandert, sodass es nicht zu einer Verklemmung des Zugelements auf dem ersten Rotationskörper kommt. Umfangsnuten sind jeweils in Achsrichtung des Zylinders in parallelen Ebenen angeordnet und können Einlaufschrägen für das Zugelement aufweisen. Es ist auch möglich, dass der erste Rotationskörper eine mehr oder weniger konische Kontur aufweist, beispielweise die eines abgeschnittenen Konus, bei dem die Umfangsnuten einen unterschiedlichen Umfang aufweisen. Vorzugsweise weisen die Umfangsnuten jedoch denselben Durchmesser auf, sodass das Moment, das auf das wenigstens eine zumindest zugsteife Zugelement wirkt, in allen Nuten ungefähr dasselbe ist. Hierdurch kommt es nicht zu einer unnötigen Spannung des Zugelements infolge unterschiedlicher Momentenbelastung in den verschiedenen Nuten.

Zwischen den benachbarten Umfangsnuten sind vorzugsweise radiale Stege angeordnet, die verhindern, dass das wenigstens eine zumindest zugsteife Zugelement die jeweilige Umfangsnut verlässt. Wird die Antriebseinrichtung angetrieben, kann ein Teil der Kraftübertragung auch durch das Reiben des wenigstens einen zumindest zugsteifen Zugelements an dem entsprechenden radialen Steg übertragen werden. Es ist möglich, innerhalb der Umfangsnut eine parallel zur Achsrichtung des Rotationskörpers verlaufende Rändelung vorzusehen, die punktuell die Kraftübertragung auf das das wenigstens eine zumindest zugsteife Zugelement erhöht.

Zweckmäßiger Weise weisen der erste Rotationskörper und der zweite Rotationskörper, die jeweils vorzugsweise als Zylinder ausgebildet sind, parallele Achsen auf. Hierdurch ist es möglich, durch Einstellung des Achsenabstands die Spannung des wenigstens einen zugsteifen Zugelements günstig einzustellen und auch Längungen oder Verkürzungen des Zugelements, die temperaturbedingt oder durch intensive Benutzung auftreten können, im Nachhinein auszugleichen. Durch die parallelen Achsen wird die Kraft auf das Zugelement besonders günstig übertragen. Es ist alternativ aber möglich, die Achsen der Rotationskörper auch in einem Winkel zueinander anzuordnen, beispielsweise wenn die Rotationskörper als Kegel ausgebildet sind.

Vorzugsweise weisen der erste Rotationskörper und/oder der zweite Rotationskörper zur Justierung der Länge des zumindest einen zugsteifen Zugelements einen zueinander veränderlichen Abstand auf. Dies kann dadurch erfolgen, dass der Rotationskörper im Bereich seiner Achse in einem Langloch aufgenommen ist, das eine Zustellung in Richtung auf den anderen Rotationskörper zulässt. Zweckmäßiger Weise wird dies für den zweiten Rotationskörper vorgesehen, da der erste Rotationskörper von dem Antrieb angetrieben wird und dann auch der Antrieb versetzbar ausgebildet werden müsste. Je nach eingestelltem Abstand kann insbesondere ein Durchhängen des wenigstens einen zumindest zugsteifen Zugelements verhindert werden, sodass es praktisch keinen Schlupf bei der Übertragung der Antriebsleistung von dem Antrieb auf die Schlitten gibt.

Zweckmäßiger Weise ist der zweite Rotationskörper in Richtung auf den ersten Rotationskörper verlagerbar, sodass sich die Spannung des Zugelements einstellen lässt. Es ist alternativ möglich, den zweiten Rotationskörper in einer den Abstand zu dem ersten Rotationskörper nicht veränderliche Richtung einstellen zu können.

Gemäß einer günstigen Weiterbildung ist zwischen dem ersten Rotationskörper und dem zweiten Rotationskörper ein Federglied angeordnet, das den zweiten Rotationskörper beziehungsweise dessen Achse in Richtung fort von dem ersten Rotationskörper beziehungsweise dessen Achse beaufschlagt und damit ein Spannen des wenigstens einen zumindest zugsteifen Zugelements erreicht. Damit wird günstiger Weise ein stabiles System erreicht, da das Federglied bei Belastungsspitzen infolge von Deformationen im Bereich des Verdeckgestells oder des Unterbaus oder bei Hindernissen, die überwunden werden müssen, gespannt werden kann, sodass es zu einem geringfügigen Ausgleich der Spannung des Zugelements innerhalb des Systems kommt. Sobald das Hindernis überwunden ist, nimmt der zweite Rotationskörper wieder den aufgrund der Federkonstante des Federglieds voreingestellten Abstand zu dem ersten Rotationskörper ein und das System des Zugelements verfügt wieder über seine Ausgangsspannung. Das Federglied dämpft überdies in günstiger Weise durch den Antrieb und die Bewegung des Fahrzeugs sowie des Verdeckgestells aufheben die Schwingungen

Eine vorteilhafte Ausführung zeichnet sich dadurch aus, dass zumindest der zweite Rotationskörper eine Mehrzahl von unabhängig rotierbaren scheibenförmigen Zylinderabschnitten umfasst, wobei der scheibenförmige Zylinderabschnitt jeweils von dem wenigstens einen zumindest zugsteifen Zugelement umschlungen ist. Hierdurch wird ähnlich wie bei einem mehrfachen Flaschenzug jeder unabhängig rotierbare scheibenförmige Zylinderabschnitt einzeln von dem ersten Rotationskörper angetrieben, mit dem Ergebnis, dass der Widerstand gegen Rotation des zweiten Rotationskörpers insgesamt herabgesetzt ist. Die scheibenförmigen Zylinderabschnitte können in der Art von Umlenkrollen ausgebildet sein, wie sie für die Umlenkung des Zugelements im Bereich des Unterbaus ohnehin eingesetzt werden. Zweckmäßiger Weise sind wenigstens zwei, vorzugsweise drei, vier, fünf oder sechs scheibenförmige Zylinderabschnitte vorgesehen, die zueinander koaxial auf der Achse des zweiten Rotationskörpers angeordnet sind. Es ist aber auch möglich, die Zylinderabschnitte auf mehreren Achsen zu lagern, was allerdings eine aufwändigere Halterung nach sich zieht.

Die Kraftübertragung von dem ersten Rotationskörper auf das wenigstens eine zumindest zugsteife Zugelement erfolgt vorzugsweise durch Reibung, insbesondere am Umfang des ersten Rotationskörpers. Es ist aber auch möglich, den Umfang des Rotationskörpers mit Vertiefungen nach Art einer Umfangsverzahnung auszustatten und das Zugelement mit Vorsprüngen nach Art eines Zahnriemens auszustatten, sodass der Formschluss im Bereich des Kontaktes die Kraftübertragung bewirkt.

Gemäß einer anderen günstigen Ausgestaltung können die Nuten und Stege V-förmig ausgebildet sein, so dass sie das Zugelement teilweise am Umfang klemmend transportieren, und ein Schlupf praktisch ausgeschlossen ist.

Gemäß einer bevorzugten Ausgestaltung ist vorgesehen, dass ein Sperrstift vorgesehen ist, der gegen ein rotierbares Teil des ersten Rotationskörpers vorschiebbar ist, dass der Sperrstift den ersten Rotationskörper gegen Verdrehung sichert und damit den Schlitten auch in einem nicht angetriebenen Zustand des Antriebs blockiert.

Gemäß einem Aspekt ist ein öffenbarer Aufbau für einen Unterbau, wie ein selbstfahrendes Lastfahrzeug, einen Lastkraftwagen, einen Auflieger, einen Anhänger, einen Container, eine Kippmulde, einen Bahnwaggon, ein Gebäude oder dergleichen geschaffen, umfassend ein zusammenfaltbares Verdeckgestell, eine an dem Verdeckgestell anschließbare Abdeckung, insbesondere eine Plane, und einen Antrieb zum Ein- und/oder Ausfalten des Verdeckgestells, wobei der Antrieb wenigstens ein zumindest zugsteifes Zugelement zu einer Bewegung veranlasst, wobei das wenigstens eine, zumindest zugsteife Zugelement mit einem distalen Schlitten des Verdeckgestells koppelbar ist und den Schlitten in Abhängigkeit von einer Betätigungsrichtung des Antriebs vor und/oder zurück bewegt. Der Aufbau zeichnet sich dadurch aus, dass ein Sperrstift vorgesehen ist, der gegen ein rotierbares Teil des Antriebs vorschiebbar ist, und dass der Sperrstift den Antrieb und/oder das wenigstens eine zumindest zugsteife Zugelement gegen Verdrehung sichert und damit den Schlitten auch im stromlosen Zustand des Antriebs blockiert. Hierdurch wird vorteilhaft erreicht, dass zum Halten des vollständig, teilweise oder nicht geöffneten Verdeckgestells der Antrieb nicht permanent bestromt werden muss, was zu einer hohen Leistungsaufnahme und Wärmeentwicklung führt. Überdies wird dadurch wirksam verhindert, dass zum Halten des geöffneten Verdeckgestells in einer ungünstigen Winkelposition des Unterbaus oder im Fahrbetrieb wegen der auftretenden Winde die zulässige Stromaufnahme überschritten wird. Schließlich wird das manuelle Ver- und Entriegeln des öffenbaren Aufbaus außerhalb des wenigstens einen zumindest zugsteifen Zugelements vermieden, sodass es nicht zu einer Fehlbedienung kommen kann. Der Sperrstift stellt sicher, dass im stromlosen Zustand des Antriebs eine Verdrehung des rotierbaren Teils des Antriebs, in das der Sperrstift vorgeschoben ist, insbesondere also einem Rotationskörper wie dem vorstehend beschriebenen ersten Zylinder, der Schlitten nicht gegen die Vorspannung des Zugelements verlagerbar ist. Hierdurch wird in vorteilhafter Weise der Schlitten nicht nur über das Zugelement angetrieben, sondern auch verriegelt. Eine gesonderte mechanische Verriegelung, die händisch gelöst werden muss, ist dann nicht mehr vorzusehen.

Der Sperrstift ist zweckmäßiger Weise zwischen einer vorgeschobenen Position und einer zurückgezogenen Position betätigbar und weist hierzu vorzugsweise einen elektromagnetischen Antrieb an, der von einer Steuerung des Antriebs leicht in die eine und/oder in die andere Richtung ausgelöst werden kann.

Es ist möglich, eine Schaltung oder Anordnung vorzusehen, bei der der Sperrstift bei einem Stoppen der Betätigung des Antriebs automatisch vorgeschoben wird. Alternativ kann der Sperrstift auch manuell vorgeschoben werden oder in anderer zweckmäßiger Weise, beispielsweise pneumatisch oder hydraulisch.

Der Sperrstift blockiert zweckmäßiger Weise einen angetriebenen ersten Rotationskörper, insbesondere des Antriebs und hindert diesen an einer Drehung, sodass über den ersten Rotationskörper weder Kräfte auf den Schlitten in die eine noch in die andere Richtung übertragen werden können. Hierdurch wird günstig eine Verriegelung des angetriebenen Rotationskörpers erreicht, sodass die Kräfte, die der erste Rotationskörper sonst in das System einschließlich des Zugelements einleiten könnte, wirksam verhindert sind. Alternativ kann der Sperrstift auch einen anderen Rotationskörper des Systems blockieren, beispielsweise den vorerwähnten zweiten Rotationskörper bzw. Zylinder oder jede beliebige Umlenkrolle des Systems. In diesem Fall kann es jedoch zu einem leichten Flattern des Verdeckgestells kommen, da sich der angetriebene Rotationskörper dann möglicherweise unter dem Zugelement hinwegzudrehen versucht.

Vorzugsweise ist der Sperrstift von einem Federelement in die vorgeschobene Position belastet. Hierdurch wird vorteilhaft sichergestellt, dass der Sperrstift stets dann, wenn der Antrieb stromlos sein sollte, der Sperrstift mit dem rotierbaren Teil in Eingriff gelangt und diesen an einer Drehung hindert. Hierzu ist vorzugsweise vorgesehen, dass das rotierbare Teil eine Ausnehmung aufweist, in die der Sperrstift vorschiebbar ist, so dass das rotierbare Teil an einer weiteren Rotation gehindert ist. Es ist möglich, das Federelement mit dem Sperrstift zu koppeln, aber vorzugsweise wird das Federelement bereits in einen elektrisch betätigbaren Hubmagneten verbaut sein, der dann den Sperrstift gegen die Vorspannung des Federelements zurückzieht.

Vorzugsweise ist der Sperrstift in eine stirnseitige Ausnehmung des ersten Rotationskörpers vorschiebbar, die vorzugsweise auf der einem Motor abgekehrten Seite des Rotationskörpers vorgesehen ist. Zweckmäßiger Weise umfasst der Rotationskörper an seiner Stirnseite hierzu eine Mehrzahl von Ausnehmungen, in die der Sperrstift eindringen kann, wobei sich eine entsprechend große Anzahl diskreter Haltepositionen ergibt. Es ist möglich, die Ausnehmung als gekrümmtes Langloch vorzusehen, um selbst bei einer Drehung des rotierbaren Teils dem Sperrstift ausreichend Gelegenheit zu verschaffen, in die Ausnehmung einzudringen. Zweckmäßiger Weise sind jedoch zylindrische Bohrungen vorgesehen, die ein geringes Übermaß gegenüber dem Außenmaß des Sperrstifts aufweisen, in die der Sperrstift leicht einrücken kann.

Es ist möglich, um das Eindringen des Sperrstifts in die Ausnehmung zu erleichtern, diesen distal mit einer Spitze oder mit einem konischen oder kalottenförmigen Abschnitt auszustatten, der das Eindringen und die Zentrierung begünstig. Hierdurch wird insbesondere der Zeitraum, der zur Verfügung steht, um in die Ausnehmung einzudringen, vergrößert.

Gemäß einer besonders günstigen Ausgestaltung weist der erste Zylinder an einer Stirnseite einen Scheibenabschnitt mit einer Mehrzahl von Löchern auf, die derart ausgebildet sind, dass der Sperrstift in jedes der Löcher vorschiebbar ist. Die Löcher sind zweckmäßiger Weise auf einem konstanten Radius um die Achse des Scheibenabschnitts angeordnet und je nach Drehwinkel des Scheibenabschnitts mit dem Sperrstift ausgefluchtet. Zweckmäßiger Weise sind wenigstens acht, vorzugsweise mehr als zehn und weniger als vierzig Löcher auf dem Scheibenabschnitt vorgesehen, in die der Sperrstift eindringen kann.

Es ist möglich, mehrere Sperrstifte gleichzeitig vorschiebbar an dem rotierbaren Teil des Antriebs vorzusehen, insbesondere dann, wenn die Kräfte, die auf das rotierbare Teil wirken, groß sind, und von mehreren Sperrstiften besser aufgenommen werden können. In diesem Fall rücken die mehreren Sperrstifte gleichzeitig ein. Gemäß einer alternativen Ausgestaltung können die Sperrstifte auch mit einer Teilung, die der Anzahl der Sperrstifte entspricht, voneinander beabstandet sein, sodass die Genauigkeit der Haltepositionen der Schlitten um einen Faktor, der der Teilung entspricht, verbessert wird. In diesem Fall kann aber nur einer der Sperrstifte in das rotierbare Teil einrücken, während die übrigen Sperrstifte beispielsweise gegen den Scheibenabschnitt drücken, ohne in die Löcher eindringen zu können.

Gemäß einer besonders günstigen Ausgestaltung ist der erste Rotationskörper bei eingerücktem Sperrstift an einer Drehung unter der Last des Verdeckgestells oder unter der Leistung des Antriebs gehindert. Hierdurch wird verhindert, dass der Antrieb eine hohe Energieaufnahme aufweist, um in entgegengesetzte Richtung wirkende Kräfte auszugleichen. So kann durch Arretierung des rotierbaren Teils mittels des Sperrstifts ein vollständig geöffnetes Verdeckgestell ohne Zufuhr von Energie in dieser Position gehalten werden, selbst wenn der als Muldenkipper ausgebildete Unterbau in eine Winkellage von 45 Grad oder mehr verbracht wird, um den Inhalt abzukippen. Auch auf den geschlossenen Aufbau wirkende Kräfte wie Winde, Niederschläge wie Wasser oder Schnee, Eisplatten, aber auch fehlgeleitete Beladung mit einem Kran führt nicht zu einer Aufnahme höherer Leistung, um das Verdeckgestell in einer geöffneten Lage zu halten.

Alternativ kann vorgesehen sein, dass der Sperrstift in eine radiale Ausnehmung des ersten Zylinders vorschiebbar ist. Die radiale Ausnehmung kann ein auf dem Umfang des Rotationskörpers vorgesehenes Lochbild mit einer Mehrzahl von Löchern oder Ausnehmungen sein, wobei der Sperrstift auch dann eine Verdrehung des Rotationskörpers verhindert. Nachteilig hierbei ist jedoch die vergrößerte Bauhöhe des Rotationskörpers und der erforderliche Abstand zu dem Zugelement.

Gemäß einer anderen Ausgestaltung ist vorgesehen, dass der Sperrstift am Ende einer schwenkbaren und in Einrückrichtung vorbespannten Klinke angeordnet ist, die mit einer Umfangsverzahnung des rotierbaren Teils des Antriebs derart zusammenwirkt, dass das Verdeckgestell an einer Verlagerung in Schließrichtung gehindert ist. Diese Klinke kann entsprechend der Einrückklinke bei einer Feststellbremse ausgebildet sein, sodass diese im angetriebenen Zustand gegen die Vorspannung einer Feder angehoben wird, aber ein Rückschlagen der Schlitten nicht zulässt.

Gemäß einer besonders günstigen Ausgestaltung ist vorgesehen, dass zur Freigabe des Sperrstiftes der Antrieb erst entgegen der beabsichtigten Verlagerungsrichtung bewegbar ist, und dass der Sperrstift dadurch zumindest vorübergehend entlastet ist, um den Sperrstift zurück ziehen zu können. Diese Ausgestaltung des Antriebs lässt sich durch eine entsprechende Programmierung der Steuerung einfach realisieren, wodurch sichergestellt ist, dass der ansonsten nicht ohne Weiteres aus einer Ausnehmung oder einem Loch des rotierbaren Teils herausziehbare radial belastete Sperrstift gleichwohl zurückgezogen werden kann. Hierbei ist zu beachten, dass je nach Position des Unterbaus, des Aufbaus und je nach Belastung der entsprechenden Teile der Sperrstift relativ große Lasten aufnehmen kann, die in der Regel in Schließrichtung wirken, aber auch in Öffnungsrichtung wirken können, beispielsweise wenn der Unterbau auf einer schrägen Fläche ruht. Wird nun der Antrieb erst entgegen der beabsichtigten Verlagerungsrichtung bewegt, das heißt, wenn eine Öffnung vorgesehen ist, in Schließrichtung, und wenn ein Schließen beabsichtigt, ist in Öffnungsrichtung, ist sichergestellt, dass egal in welche Richtung der Sperrstift belastet ist, dieser entweder bei der ersten gegenläufigen Bewegung oder bei der anschließenden Hauptbewegung für einen ausreichend langen Zeitraum entlastet ist, sodass der Sperrstift aus der entsprechenden Lochung zurückgezogen werden kann. Die Kraft, die über den rotierbaren Körper auf den Sperrstift übertragen wird, wird im Wesentlichen über eine radiale Anlage an dem Sperrstift übertragen. Diese ist aber derart hoch, dass ein Zurückziehen des Sperrstiftes aufgrund seines Antriebs, ohne dass ein Hin- und Herverlagern des Zugelements erfolgt, oft nicht möglich ist. Hierdurch ist es insbesondere vorteilhaft möglich, die Leistung für die Verlagerung des Sperrstifts gering zu dimensionieren und die Verriegelung des Sperrstifts durch die über das Zugelement auf das rotierbare Teil wirkende Masse des Verdeckgestells wirken zu lassen.

Gemäß einer günstigen Ausgestaltung ist vorgesehen, dass der Sperrstift das rotierbare Teil formschlüssig blockiert. Neben den vorstehend beschriebenen Möglichkeiten, mit denen eine formschlüssige Kopplung erreicht werden kann, kommen weitere formschlüssige Blockiermöglichkeiten in Betracht.

Gemäß einer weiteren günstigen Ausgestaltung blockiert der Sperrstift das rotierbare Teil reibschlüssig. Dies kann beispielsweise dadurch geschehen, dass eine Spitze des Sperrstifts gegen ein mit einem Reibbelag ausgestattetes rotierbares Teil gedrückt wird. In diesem Fall ist es erforderlich, eine gewisse Reibkraft aufzubringen, beispielsweise durch ein entsprechendes Federglied. Der Antrieb des Sperrstifts dient dann im Wesentlichen zur Überwindung der Kraft des Federglieds. Es ist möglich, formschlüssige und reibschlüssige Blockierung zu kombinieren.

Der Sperrstift ist zweckmäßiger Weise elektrisch betätigbar und mit einer Steuerung des Antriebs verbunden. Hierdurch kann er vorteilhaft bereits vorgeschoben werden, wenn die Antriebsbewegung ihr Ende erreicht oder nur noch gering nachläuft. Insbesondere kann die Steuerung vorsehen, dass der Antrieb weiterbetätigt bleibt, bis der Sperrstift erfolgreich in eine Blockierposition eingerückt ist, was durch einen entsprechenden Sensor detektierbar ist. Der Antrieb kann hierzu mit einem Schleichgang ausgestattet sein, der durch seine geringere Antriebsgeschwindigkeit die Möglichkeit zum Eindringen in eine Ausnehmung des rotierbaren Teils erleichtert. Zugleich kann der Sperrstift zweckmäßig mit einem Signalgeber verbunden sein, der zum einen anzeigt, dass das Verdeckgestell blockiert ist und zum anderen der Steuerung signalisiert, dass der Antrieb abgeschaltet werden kann, ohne Gefahr zu laufen, dass der stromlose Antrieb zu einem Abrutschen und damit einer Beschädigung des Verdeckgestells führt.

Gemäß einem Aspekt ist ein Verfahren zum Öffnen oder Schließen eines öffenbaren Aufbaus für einen Unterbau, wie ein selbstfahrendes Lastfahrzeug, einen Lastkraftwagen, einen Auflieger, einen Anhänger, einen Container, eine Kippmulde, einen Bahnwaggon, ein Gebäude oder dergleichen, geschaffen, umfassend ein zusammenfaltbares Verdeckgestell, eine an dem Verdeckgestell anschließbare Abdeckung, insbesondere eine Plane, und einen Antrieb zum Ein- und/oder Ausfalten des Verdeckgestells, wobei der Antrieb wenigstens ein zumindest zugsteifes Zugelement zu einer Bewegung veranlasst, wobei das wenigstens eine zumindest zugsteife Zugelement mit einem distalen Schlitten des Verdeckgestells koppelbar ist und den Schlitten in Abhängigkeit von einer Betätigungsrichtung des Antriebs vor- und/oder zurückbewegt. Das Verfahren zeichnet sich aus durch die Schritte Einrücken eines Sperrstifts gegen ein rotierbares Teil des Antriebs, wenn eine nicht nur vorläufige Halteposition des Schlittens erreicht ist, um den Schlitten auch im antriebslosen Zustand des Antriebs zu blockieren; und Antreiben des Schlittens entgegen einer gewünschten Verlagerungsrichtung des Schlittens, bevor der Schlitten in die Verlagerungsrichtung angetrieben wird, um ein Ausrücken des Sperrstifts und eine Freigabe der Verlagerung des Schlittens zu ermöglichen. Das Verfahren, das zweckmäßiger Weise in einer entsprechenden Steuerung implementiert ist, ermöglicht es, den Antrieb des Verdeckgestells zu automatisieren und zugleich mit einer geringen Stromaufnahme auszustatten, da der Antrieb auch in einem stromlosen Zustand das Verdeckgestell in seiner Öffnungslage fixiert. Hierdurch kann vorteilhaft der Antrieb mit einer geringen Leistung betrieben werden, wie sie beispielsweise am Nutzausgang einer Fahrzeugbatterie bereitgestellt wird, sodass eine eigene Energieversorgung für den Antrieb verzichtbar ist.

Ein besonders günstiger Aufbau zeichnet sich dadurch aus, dass er zur Ausführung des vorbeschriebenen Verfahrens hergerichtet ist, insbesondere eine Steuerung aufweist, die das Verfahren ausführt. Hierdurch wird vorteilhaft erreicht, dass der Antrieb und die Verrieglung durch den Sperrstift in einer sinnvollen Reihenfolge ausgeführt werden, die es ermöglicht, eine manuelle Entriegelung des Sperrstifts zu vermeiden.

Gemäß einer besonders günstigen Weiterbildung ist vorgesehen, dass der Aufbau eine Sensoranordnung aufweist oder mit einer Sensoranordnung des Unterbaus verbunden ist, die die Neigung des Aufbaus und/oder des Unterbaus gegen eine horizontale Ebene erfasst und den Antrieb blockiert, wenn die Neigung einen Grenzwert übersteigt.

Gemäß einem Aspekt ist ein öffenbarer Aufbau für einen Unterbau, wie ein selbstfahrendes Lastfahrzeug, einen Lastkraftwagen, einen Auflieger, einen Anhänger, einen Container, eine Kippmulde, einen Bahnwaggon, ein Gebäude oder dergleichen geschaffen, umfassend ein zusammenfaltbares Verdeckgestell, eine an dem Verdeckgestell anschließbare Abdeckung, insbesondere eine Plane, und einen Antrieb zum Ein- und/oder Ausfalten des Verdeckgestells, wobei der Antrieb wenigstens ein zumindest zugsteifes Zugelement zu einer Bewegung veranlasst, wobei das wenigstens eine, zumindest zugsteife Zugelement mit einem distalen Schlitten des Verdeckgestells koppelbar ist und den Schlitten in Abhängigkeit von einer Betätigungsrichtung des Antriebs vor und/oder zurück bewegt. Der Aufbau zeichnet sich dadurch aus, dass eine Sensoranordnung vorgesehen ist, die die Neigung des Aufbaus und/oder des Unterbaus gegen eine horizontale Ebene erfasst und den Antrieb blockiert, wenn die Neigung einen Grenzwert übersteigt. Hierdurch wird vorteilhaft sichergestellt, dass der Antrieb nur dann betätigt wird, wenn die Neigung des Unterbaus nicht zu einer Leistungsaufnahme führt, die die bereitgestellte Energiequelle beziehungsweise deren Absicherung übersteigt. Insbesondere dann, wenn der Unterbau mit einer Schräge zur Horizontalen in Richtung der Verlagerung des Schlitten angeordnet ist, besteht die Gefahr, dass die Leistungsaufnahme bei einer Verlagerung des Schlitten bergauf, also entgegen dem Gefälle, recht groß ist. Die Sensoranordnung verhindert, dass in einem solchen Fall zu einem Überlasten des elektrischen Systems bis hin zu einem Schmelzen der Sicherungen kommt, und insbesondere, dass die erforderliche Verlagerungsarbeit nicht erbracht werden kann. Hierdurch wird sichergestellt, dass es nicht zu einer Fehlbetätigung des Aufbaus kommt, die dazu führen könnte, dass der Unterbau nicht mehr einsatzfähig ist.

Zweckmäßiger Weise erfasst die Sensoranordnung auch, ob der Unterbau bewegt wird, und verhindert damit zugleich, dass das Verdeckgestell betätigt wird, während der Unterbau in Fahrt begriffen ist. Dies kann zusätzlich durch ein Erfassen der auf das Verdeckgestell wirkenden Kräfte, beispielsweise durch Fahrtwind und andere Relativgeschwindigkeiten, erfasst werden.

Zweckmäßiger Weise umfasst die Sensoranordnung ein Gyroskop, das zur Bestimmung der Neigung ausgebildet ist. Das Gyroskop erfasst zuverlässig die Neigungswerte, sowohl in Verlagerungsrichtung des Verdeckgestells als auch quer dazu und liefert eine entsprechend zuverlässige Information.

Gemäß einer anderen Ausgestaltung ist vorgesehen, dass die Sensoranordnung einen Beschleunigungssensor umfasst, der neben der eigentlichen Neigung auch die Bewegung in Neigungsrichtung erfassen kann. Ein Beschleunigungssensor eignet sich vorteilhaft auch zum Detektieren beispielsweise einer Abkippbewegung eines als Muldenkipper ausgebildeten Unterbaus.

Der Grenzwert der Neigung entspricht gemäß einer vorteilhaften Ausgestaltung einen Absolutbetrag von nicht mehr als 20 Prozent, vorzugsweise von nicht mehr als 15 Prozent und insbesondere einen Absolutwert der Neigung von nicht mehr als 10 Prozent. Die Neigung kann hier sowohl in die eine wie in die andere Richtung vorliegen, wobei die Möglichkeit besteht, ein Verdeckgestell in Gefällerichtung zu verlagern, selbst dann, wenn es in Richtung entgegen des Gefälles nicht mehr verlagert werden kann, ohne die zulässige Stromaufnahme zu übersteigen.

Der Antrieb umfasst zweckmäßiger Weise eine Steuerung, wobei die Sensoranordnung mit der Steuerung verbunden ist. Hierdurch wird vorteilhaft die Möglichkeit geschaffen, den Antrieb nur dann auszulösen, wenn die von der Sensoranordnung erfassten Werte innerhalb des zulässigen Rahmens liegen.

Gemäß einer bevorzugten Ausgestaltung ist vorgesehen, dass in der Steuerung Daten für eine maximale Leistungsaufnahme des Antriebs in Abhängigkeit von der Neigung des Unterbaus gespeichert sind, und dass Funktionen des Antriebs bei Überschreiten voreingestellter Maximalwerte für die Leistungsaufnahme deaktivierbar sind. Hierdurch kann je nach Winkelstellung bzw. Neigung des Aufbaus und/oder des Unterbaus noch ein Teil der Funktionen des Antriebs bereitgestellt werden, wobei die wirksamen Kräfte, die zu einer erhöhten Leistungsaufnahme führen, in Abhängigkeit von den Werten der Neigung in der Steuerung abgelegt sein können. Es ist möglich, die Steuerung mit einem selbstlernenden System zu verknüpfen, die die tatsächliche Leistungsaufnahme erfasst und dementsprechend die Grenzwerte dynamisch variiert.

Gemäß einer günstigen Ausgestaltung ist vorgesehen, dass bei Überschreiten des Grenzwertes der Schlitten an einer Verlagerung bergauf gehindert ist, und dass bei Überschreiten des Grenzwertes der Schlitten bergab verlagert werden kann. Zwar kann es sein, dass infolge der vorstehend beschriebenen gegenläufigen Anfangsbewegung eine erhöhte Leistungsaufnahme eintritt, diese ist aber zeitlich so begrenzt, dass es nicht zu einem Schmelzen der Sicherung kommen kann.

Gemäß einer bevorzugten Ausgestaltung wird der Antrieb von einer Fahrzeugbatterie mit Energie versorgt, die mit 20 Ampere abgesichert ist. Dies entspricht der Leistung, die von einem Ausgang einer Fahrzeugbatterie für Verbraucher wie Suchscheinwerfer und dergleichen bereitgestellt wird.

Zweckmäßiger Weise umfasst die Sensoranordnung Mittel zur Erfassung des Verlagerungswegs der Schlitten, sodass die noch zu überwindende Wegstrecke bei der Berechnung, ob die Neigung im Toleranzbereich liegt oder nicht, berücksichtigt werden kann.

Bei einer Ausgestaltung des Unterbaus als Kippmulde veranlasst vorzugsweise eine Steuerung des Antriebs eine Verlagerung des Schlitten in eine zurückgezogene Stellung, bevor eine unzulässige, von der Sensoranordnung erfasste Winkelstellung, die ein Abschütten der Ladung entspricht, erreicht wird. Hierdurch wird vorteilhaft sichergestellt, dass das Verdeckgestell ein Stück weit geöffnet wird, bevor die Kippmulde ihre Kipplage erreicht, sodass das in der Kippmulde enthaltene Schüttgut das Verdeckgestell nicht belastet oder gar beschädigt.

Vorzugsweise umfasst der Aufbau eine Sensoreinrichtung, die einen Positionssensor für den Schlitten umfasst, wobei der Antrieb gestoppt wird, wenn der Schlitten eine von zwei Endpositionen erreicht.

Gemäß einem Aspekt ist ein öffenbarer Aufbau für einen Unterbau, wie ein selbstfahrendes Lastfahrzeug, einen Lastkraftwagen, einen Auflieger, einen Anhänger, einen Container, eine Kippmulde, einen Bahnwaggon, ein Gebäude oder dergleichen geschaffen, umfassend ein zusammenfaltbares Verdeckgestell, eine an dem Verdeckgestell anschließbare Abdeckung, insbesondere eine Plane, und einen Antrieb zum Ein- und/oder Ausfalten des Verdeckgestells, wobei der Antrieb wenigstens ein zumindest zugsteifes Zugelement zu einer Bewegung veranlasst, wobei das wenigstens eine, zumindest zugsteife Zugelement mit einem distalen Schlitten des Verdeckgestells koppelbar ist und den Schlitten in Abhängigkeit von einer Betätigungsrichtung des Antriebs vor und/oder zurück bewegt. Der Aufbau zeichnet sich dadurch aus, dass eine Sensoreinrichtung vorgesehen ist, die einen Positionssensor für den Schlitten umfasst, und dass der Antrieb gestoppt wird, wenn der Schlitten eine von zwei Endpositionen erreicht. Vorteilhaft wird hierdurch verhindert, dass der Antrieb gegen einen zunehmenden Widerstand bei Erreichen der Endposition belastet werden muss, um das Erreichen der Endposition des Schlittens zu erfassen. Vielmehr kann die Zunahme der Belastung bei der Verlagerung der Schlitten zur Detektion eines Hindernisses oder einer Störung genutzt werden. Zugleich kann der Positionssensor dafür genutzt werden, die Verfahrstrecke und die damit einhergehende voraussichtliche Verfahrdauer sowie die damit verbundene Energieaufnahme abzuschätzen, um festzustellen, ob die erforderliche Leistung bereitgestellt werden kann.

Der Positionssensor kann vorzugsweise den Durchgang eines auf den wenigstens einen zumindest zugsteifen Zugelement angeordneten Weggebers erfassen. Der Weggeber ist vorzugsweise als Magnet ausgebildet, kann aber auch ein anderes detektierbares Teil sein. Der Positionssensor kann auch als Feldsensor ausgebildet sein, der in der Lage ist, Durchgang des distalen Schlittens zu erfassen. Der Weggeber ist zweckmäßiger im Bereich des distalen Schlittens angeordnet, oder ist Teil des distalen Schlittens, sodass die Position des distalen Schlittens ausschlaggebend ist für die Ermittlung des Öffnungs- beziehungsweise Schließzustands des Verdeckgestells.

Der Positionssensor ist gemäß einer anderen Ausgestaltung als optischer Sensor ausgebildet, beispielsweise als Zeilenkamera oder Matrixkamera, die entweder den Durchgang des distalen Schlittens oder eines mit diesem verbundenen Weggebers erfasst, oder aber aus der Position des distalen Schlittens an dem Verdeckgestell den Öffnungszustand des Verdeckgestells ermittelt.

Gemäß einer alternativen Ausgestaltung ist vorgesehen, dass der Positionssensor eine Markierung an dem wenigstens einen zumindest zugsteifen Zugelements erfasst. Hierdurch kann vorteilhaft der Positionssensor auch beabstandet von dem distalen Schlitten angeordnet sein, wenn die Markierungen ebenfalls von dem distalen Schlitten beabstandet vorgesehen sind.

Gemäß einer alternativen Ausgestaltung ist vorgesehen, dass die Sensoreinrichtung die Leistungsaufnahme des Antriebs erfasst, und dass in Abhängigkeit einer zunehmenden Leistungsaufnahme des Antriebs das Verfahren des Schlittens gegen eine der beiden Endpositionen ermittelt wird. In diesem Fall ist der Positionssensor beispielsweise als induktiver Sensor ausgebildet, der die Stromaufnahme des Antriebs mit einem gespeicherten Werteverlauf vergleichen kann. Hierbei kann in der Steuerung auch die Leistungsaufnahme des Antriebs zum Zusammenfalten von Planenfalthilfen und dergleichen in einem Speicher der Steuerung hinterlegt sein, sodass unplanmäßige Leistungsaufnahmen als repräsentativ für einen Störungszustand erfasst werden können.

Vorzugsweise ist ein erster Schwellenwert für eine Stromaufnahme des Antriebs vorgesehen, der im gewöhnlichen Betrieb begrenzt, wobei eine den ersten Schwellenwert übersteigende Stromaufnahme des Antriebs für die Dauer eines ersten Zeitraums zugelassen ist, um Arbeitsspitzen zu bewältigen.

Gemäß einem Aspekt ist ein öffenbarer Aufbau für einen Unterbau, wie ein selbstfahrendes Lastfahrzeug, einen Lastkraftwagen, einen Auflieger, einen Anhänger, einen Container, eine Kippmulde, einen Bahnwaggon, ein Gebäude oder dergleichen geschaffen, umfassend ein zusammenfaltbares Verdeckgestell, eine an dem Verdeckgestell anschließbare Abdeckung, insbesondere eine Plane, und einen Antrieb zum Ein- und/oder Ausfalten des Verdeckgestells, wobei der Antrieb wenigstens ein zumindest zugsteifes Zugelement zu einer Bewegung veranlasst, wobei das wenigstens eine, zumindest zugsteife Zugelement mit einem distalen Schlitten des Verdeckgestells koppelbar ist und den Schlitten in Abhängigkeit von einer Betätigungsrichtung des Antriebs vor und/oder zurück bewegt. Der Aufbau zeichnet sich hierbei dadurch aus, dass ein erster Schwellenwert für eine Stromaufnahme des Antriebs vorgesehen ist, der die Leistungsaufnahme im gewöhnlichen Betrieb begrenzt, und dass eine den ersten Schwellenwert übersteigende Stromaufnahme des Antriebs für die Dauer eines ersten Zeitraums zugelassen ist, um Arbeitsspitzen zu bewältigen. Hierdurch wird vorteilhaft erreicht, dass die vom Nutzausgang einer Fahrzeugbatterie üblicherweise bereitgestellte, durch eine Sicherung abgesicherte maximale Stromaufnahme im Dauerbetrieb nicht überschritten wird, sodass es nicht zu einem Überhitzen der Batterie oder des Bordnetzes kommt noch zu einem Anschlagen oder Durchbrennen der Sicherung. Zweckmäßiger Weise ist der Schwellenwert circa 15 Prozent unterhalb der abgesicherten Stromaufnahme ausgewählt, um zufällige Schwankungen bei der Stromaufnahme nicht beachten zu müssen. Die Sicherung der Energieversorgung des Nutzausgangs einer Fahrzeugbatterie ist jedoch recht träge, sodass eine kurzzeitige Überschreitung der maximalen Aufnahme unschädlich ist, sofern der erste Zeitraum nicht überschritten wird. Dies versetzt den Antrieb in die Lage, den besonders energieaufwändigen Vorgang des Anfahrens sowie des Hochstoßens der Planenfalthilfen des Verdeckgestells, bei dem eine vergleichsweise große Gewichtskraft überwunden werden muss, mit einer erhöhten Leistungsaufnahme auszustatten, sodass es insgesamt zu einer oszillierenden Stromaufnahme kommt, die Lastspitzen immer dann, wenn die Planenfalthilfen hochgestoßen werden, aufweist. Hierdurch kann das Antriebssystem des Verdeckgestells mit einer Leistung ausgestattet sein, die die von einem Nutzausgang einer Fahrzeugbatterie bereitgestellten Nennleistung immer wieder übersteigt, ohne deren Sicherung auszulösen. Der erste Zeitraum kann mehrfach während der Verlagerung des Aufbaus vorgesehen sein.

Der erste Schwellenwert für die Stromaufnahme entspricht zweckmäßiger dem Nennstrom eines Motors des Antriebs und beträgt beispielsweise 10 Ampere. Ist der Motor stärker ausgelegt, ist das Maximum von abgesicherter Stromaufnahme und Nennstrom des Motors als Maximalwert für den ersten schwellenwert zweckmäßig. Es ist möglich, für den Schwellenwert einen Sicherheitsabschlag von der abgesicherten Stromaufnahme auszuwählen, beispielsweise 19 Ampere, besonders bevorzugt 18 Ampere und in einer besonders günstigen Ausgestaltung 17,5 Ampere. Hierdurch wird ein ausreichender Abstand von der abgesicherten Leistung der Fahrzeugbatterie eingehalten, der jedoch zugleich das Öffnen und Schließen des Verdeckgestells in ansprechender Geschwindigkeit ermöglicht. Hingegen ist von dem Nennstrom des Motors ein Sicherheitsabschlag für den Schwellenwert nicht geboten. Über einen vergleichsweise kurzen Zeitraum kann der Motor auch mit einer Leistungsaufnahme betrieben werden, die über dem Nennstrom liegt.

Vorzugsweise beträgt der erste Zeitraum zwischen 0,0001 Sekunden (eine Zehntel Millisekunde) und 10 Sekunden, besonders bevorzugt zwischen 0,001 Sekunden (eine Millisekunde) und 5 Sekunden, und ganz besonders günstig zwischen 0,01 (10 Millisekunden) und 3 Sekunden. Der erste Zeitraum ist damit ausreichend lang bemessen, dass die Arbeit des Anhebens der Planenfalthilfen insbesondere dann, wenn das Fahrzeug eine gewisse Neigung aufweist und/oder die Plane durch Schnee, Eis oder Regen belastet ist, veranlasst werden kann, wobei die Leistungsaufnahme nach dem Überwinden der Arbeit zum Anheben der Planen wieder herabgesetzt ist. In der Praxis beträgt der erste Zeitraum mehrere Zehntelsekunden, etwa 2 bis 8 Zehntelsekunden, so dass bei einer anliegenden Nennspannung von 24 Volt kurzzeitig eine erhöhte Leistungsaufnahme ermöglicht ist.

Überdies ist günstiger Weise zusätzlich vorgesehen, dass für die Dauer des ersten Zeitraums ein zweiter Schwellenwert für eine Stromaufnahme des Antriebs vorgesehen ist, der die Leistungsaufnahme während des ersten Zeitraums begrenzt, beispielsweise auf den abgesicherten Betrag eines Nuztzausgangs einer Fahrzeugbatterie, der z.B. 20 Ampere beträgt. Damit ist auch während Bewältigung der Arbeitsspitzen sichergestellt, dass die Sicherungen nicht durchbrennen. Es ist möglich, wenn der erste Zeitraum recht kurz ausgewählt ist, also weniger als 8 oder besser weniger als 3 Zehntelsekunden beträgt, den zweiten Schwellenwert für die Stromaufnahme des Antriebs sogar noch höher als die abgesicherte Stromaufnahme auszuwählen, da die Trägheit der Sicherung dies zulässt. So kann bei einer abgesicherten Stromaufnahme von 20 Ampere und einem Nennstrom des Motors von ebenfalls 20 Ampere der zweite Schwellenwert auf 30 Ampere festgelegt werden, um so eine erhöhte Leistung bereitzustellen.

Es ist möglich, ein Mindestzeitintervall vorzusehen, das zwischen sukzessiven ersten Zeiträumen liegt, beispielsweise um sicherzustellen, dass das System nicht überhitzt oder trotz ihrer Trägheit die Sicherung anschlägt. Das Intervall beträgt zweckmäßiger Weise die Dauer des ersten Zeitraums, vorzugsweise das Doppelte der Dauer des ersten Zeitraums und besonders günstig mindestens das Fünffache des ersten Zeitraums. Damit sind das Intervall und der erste Zeitraum in etwa im Verhältnis der Wegstrecken des Schlittens zueinander abgestimmt, sodass die Verfahrgeschwindigkeit der Schlitten zum Aufbringen der Arbeit des Öffnens beziehungsweise des Schließens des Verdeckgestells zumindest in erster Näherung konstant ist und für den außenstehenden Betrachter ein gleichmäßiger, ruckelarmer und harmonischer Bewegungsablauf gegeben ist.

Es ist möglich, die Stromaufnahme der Verlagerung der Schlitten zum Öffnen und Schließen des Verdeckgestells während der Fahrt zu erfassen und die Fahrtgeschwindigkeit in Abhängigkeit davon, ob die Parameter Schwellenwert und erster Zeitraum erreicht werden, anzupassen.

Zweckmäßiger Weise erfolgt die Stromaufnahme des Antriebs oszillierend, sodass eine hohe Stromaufnahme im Bereich des Aufstoßens der Planenfalthilfen oder des Überwindens von Widerständen wie Deformationen des Unterbaus, Beschädigungen der Führung und so weiter gegeben ist, eine niedrige Stromaufnahme bei der übrigen Verlagerung der Schlitten.

Zweckmäßiger Weise ist der Antrieb von einer Energiequelle eines den Unterbau transportierenden Fahrzeugs elektrisch versorgt, beispielsweise der Fahrzeugbatterie bzw. deren Nutzausgang. Hierdurch ist es nicht erforderlich, den Unterbau bzw. den Aufbau mit einer eigenen Batterie bzw. Energieversorgung auszustatten, sodass kein Erfordernis besteht, diese Energiequelle zu laden beziehungsweise zu warten.

Gemäß einer bevorzugten Weiterbildung des Aufbaus ist vorgesehen, dass die Steuerung des Fahrzeugs den Antrieb des Aufbaus steuert.

Gemäß einer bevorzugten Ausgestaltung wird die Maximalstromaufnahme des Antriebs bei Anheben einer Planenfalthilfe erreicht. Es ist aber auch möglich, dass die maximale Stromaufnahme beim Anfahren, bei Überwinden eines Hindernisses oder bei Ausgleich der Deformation eines Unterbaus erreicht wird.

Die maximale Stromaufnahme der Verlagerungsbewegung des Aufbaus hängt von einer Reihe von Parametern ab, zu denen auch die Neigung des Aufbaus beziehungsweise des Unterbaus gegenüber der Horizontalen gehört. So ist eine Verlagerung entgegen einer Steigung mit einer höheren Stromaufnahme verbunden als eine Verlagerung in Richtung des Gefälles. Zweckmäßiger Weise ist daher eine Sensoranordnung vorgesehen, die die Neigung des Aufbaus bzw. des Unterbaus erfasst und die Steuerung umfasst Mittel, die die voraussichtliche Stromaufnahme in Abhängigkeit von der Neigung des Fahrzeugs ermitteln. Hierbei kann je nach Neigung und je nach Stromaufnahme im ungeneigten Zustand der Antrieb des Verdeckgestells blockiert sein, wenn die Neigung einen kritischen Schwellenwert übersteigt.

Gemäß einem Aspekt ist ein Verfahren zum Öffnen und Schließen eines Aufbaus für einen Unterbau, wie ein selbstfahrendes Kraftfahrzeug, einen Lastkraftwagen, einen Auflieger, einen Anhänger, einen Container, eine Kippmulde, ein Gebäude oder dergleichen, geschaffen, umfassend ein zusammenfaltbares Verdeckgestell, eine an dem Verdeckgestell anschließbare Abdeckung, insbesondere eine Plane, und einen Antrieb zum Ein- und/oder Ausfalten des Verdeckgestells, wobei der Antrieb wenigstens ein zumindest zugsteifes Zugelement zu einer Bewegung veranlasst, wobei das wenigstens eine zumindest zugsteife Zugelement mit einem distalen Schlitten des Verdeckgestells koppelbar ist und den Schlitten in Abhängigkeit von einer Betätigungsrichtung des Antriebs vor- und/oder zurückbewegt. Das Verfahren zeichnet sich aus durch die Schritte Antreiben des Schlittens mit einer Leistung, die unter einem ersten Schwellenwert für eine Stromaufnahme des Antriebs liegt, um den Schlitten zu verlagern, und Antreiben des Schlittens für die Dauer eines ersten Zeitraums mit einer Leistung, die über dem ersten Schwellenwert für eine Stromaufnahme des Antriebs liegt, um den Schlitten zu verlagern, wenn eine durch ein Aufstoßen der Abdeckung erforderliche Arbeitsspitze erforderlich ist. Das Verfahren ermöglicht es zweckmäßig, trotz einer vergleichsweise niedrig abgesicherten elektrischen Leistung, Leistungsspitzen für den Aufbau bereitzustellen.

Gemäß einem Aspekt ist ein Aufbau geschaffen, der eine Steuerung umfasst, die hergerichtet ist zur Ausführung des vorbeschriebenen Verfahrens. Die Steuerung ist dabei derart ausgestaltet, dass der Aufbau keine eigene Energiequelle benötigt, um das Verdeckgestell zu öffnen und zu schließen, sondern auf vorhandene Energiequellen beziehungsweise deren Nutzausgang zugreifen kann.

Eine zweckmäßige Ausgestaltung des Aufbaus zeichnet sich dadurch aus, dass eine Kamera vorgesehen ist, die den Innenbereich zumindest des Unterbaus abtastet. Hierdurch ist es vorteilhaft möglich, zu erfassen, ob der Unterbau befüllt ist oder nicht und ob möglicherweise im Bereich der Verlagerung der Schlitten Schüttgut oder Verunreinigungen vorgesehen sind.

Eine weitere günstige Weiterbildung des Aufbaus ergibt sich dadurch, dass ein Arbeitsscheinwerfer vorgesehen ist, der den Innenbereich zumindest des Unterbaus beleuchtet. Der Arbeitsscheinwerfer kann über dieselbe Energieversorgung wie der Antrieb versorgt werden und ermöglicht es, beispielsweise für ein Beladen des Unterbaus erforderliche Beleuchtung bereitzustellen.

Zweckmäßiger Weise wird der Scheinwerfer ausgeschaltet, wenn der Antrieb motorisch angetrieben wird, um zu vermeiden, dass Grenzen der Leistungsaufnahme der Energieversorgung überschritten werden.

Gemäß einer günstigen Ausgestaltung ist vorgesehen, dass an dem Unterbau oder an dem Aufbau ein Bedienfeld angeordnet ist, das mit einer Steuerung des Antriebs verbunden ist. Das Bedienfeld ist zweckmäßiger Weise mit einer Mehrzahl von Bedientasten und mehreren Anzeigen ausgestattet, mit denen sich der Antrieb bedienen lässt. So kann eine Bedientaste zum Öffnen des Antriebs genutzt werden. Eine andere Bedientaste kann zum Schließen des Verdeckgestells benutzt werden. Anzeigen können beispielsweise Störungen oder zulässige oder unzulässige Neigungslagen anzeigen, ferner können Bedientasten für den Scheinwerfer oder die Kamera vorgesehen sein. Es ist auch möglich, ein Display in dem Bedienfeld vorzusehen, das die von der Kamera erfassten Bilder anzeigt.

Gemäß einer weiteren vorteilhaften Verwirklichung ist vorgesehen, dass der Antrieb eine Steuerung umfasst, die ein Interface mit einem Hotspot, insbesondere einem WiFi- oder Bluetooth-Hotspot, aufweist, über das ein an den Hotspot angeschlossenes Bediengerät, wie ein Smartphone oder ein Tablet-Computer, zur Betätigung des Antriebs einsetzbar ist. Hierdurch ist es nicht erforderlich, dass eine Bedienperson die Eingaben unmittelbar am Bedienfeld eingibt, sondern dies kann über das externe Bediengerät erfolgen. So kann beispielsweise der Fahrer eines Sattelschleppers den Aufbau des Aufliegers mittels eines Tablet-PCs oder seines Smartphones fernsteuern, zugleich bekommt er auf das Display seines Bediengeräts das Bild der Kamera angezeigt.

Überdies kann das Bedienfeld auch im Führerhaus eines entsprechenden Lastfahrzeugs angeordnet sein.

Die Möglichkeit, ein externes Bediengerät zu nutzen, ermöglicht es insbesondere, selbstfahrende Lastfahrzeuge einzusetzen, bei denen kein Fahrer den Unterbau bzw. den Aufbau bedienen kann. In diesem Fall reicht es aus, wenn eine mit einem Bediengerät ausgestattete Person am Zielort sich über den Hotspot als zulässige Bedienperson identifiziert und die entsprechenden Kommandos gibt. Dies kann auch automatisiert durch einen Computer erfolgen.

Bei einer günstigen Ausgestaltung des Unterbaus als Kippmulde wird er Schlitten bei Erreichen einer von der Sensoranordnung erfassten Winkeleinstellung, die einem Abschütten der Ladung entspricht, vorteilhaft zurückgefahren, sodass die Ladung das Verdeckgestell und insbesondere die Plane nicht beschädigen kann. Hierbei kann das Verlagern beziehungsweise Zurückfahren der Schlitten bereits in die Wege geleitet werden, bevor die Kippmulde ihre endgültige Winkelstellung erreicht hat.

Vorzugsweise ist vorgesehen, dass weitere Schlitten auf einer Seite des Verdeckgestells von dem wenigstens einen zumindest zugsteifen Zugelement frei sind. Hierdurch ist es möglich, dass die Schlitten sich frei auf einer Führung des Verdeckgestells bewegen können, und dass nur der distale Schlitten durch eine entsprechende Vorrichtung mit dem Zugelement gekoppelt ist. Alternativ kann die Mitnahme des distalen Schlittens durch ein mit dem Zugelement verbundenes Gleitstück erfolgen, das den distalen Schlitten nur in eine Richtung beaufschlagt, sodass das Öffnen des Schlittens entgegen der Rückstellkraft der Masse des Verdeckgestells durch den Antrieb erfolgt, das Schließen hingegen unter der Last der Masse ohne Antrieb.

Das wenigstens eine zumindest zugsteife Zugelement verläuft zweckmäßiger Weise abschnittsweise parallel zu einer Führungsschiene für den Schlitten. Hierdurch kann es in einfacher Weise mit dem distalen Schlitten gekoppelt werden.

Das wenigstens eine zugsteife Zugelement ist zweckmäßig als endloses, geschlossenes Zugelement ausgebildet, sodass der Antrieb dieses in beide Richtungen verlagern kann. Das Zugelement kann dabei wahlweise den distalen Schlitten auf einer Seite des Verdeckgestells antreiben oder auch beide distale Schlitten auf beiden Seiten des Verdeckgestells.

Zweckmäßiger Weise ist das wenigstens eine zumindest zugsteife Zugelement als metallischer Draht, insbesondere aus Stahl, ausgebildet, das wenig dehnbar ist, sich bei Temperaturschwankungen auch nur geringfügig verlängert oder verkürzt, und das eine große Robustheit gegenüber Beeinträchtigungen von außen aufweist.

Die Enden des wenigstens einen zugsteifen Zugelements sind vorzugsweise mit einer Klemme miteinander verbunden, um ein endlos umlaufendes Zugelement zu erreichen, wobei die Klemme vorteilhaft zugleich die Verbindung zu einem distalen Schlitten des Verdeckgestells bewirkt. Werden mehrere Schlitten von dem Zugelement angetrieben, kann ohne Weiteres eine zweite Klemme an dem Zugelement angeschlossen werden.

In einer bevorzugten Ausgestaltung ist vorgesehen, dass das wenigstens eine zumindest zugsteife Zugelement mit zwei distalen Schlitten, die an einem gemeinsamen Holm angeschlossen sind, verbunden ist, und dass das Zugelement die beiden distalen Schlitten gleichzeitig antreibt. Hierzu ist es nicht erforderlich, zwei Zugelemente vorzusehen, vielmehr ermöglicht der Antrieb das gleichzeitige Antreiben der beiden Schlitten. Weist das Verdeckgestell einen ausreichend steifen Endschlitten auf, ermöglicht dies das Antreiben des distalen Schlitten von nur einer Seite, sodass dann keine Notwendigkeit besteht, zwei distale Schlitten gleichzeitig anzutreiben.

Gemäß einer bevorzugten Ausgestaltung ist vorgesehen, dass das wenigstens eine zumindest zugsteife Zugelement mit einem distalen Schlitten, der an einen Holm angeschlossen ist, verbunden ist, und das zusammenfaltbare Verdeckgestell einseitig antreibt. Es ist auch möglich, dass der distale Schlitten nicht an einen Holm angeschlossen ist, beispielsweise dann, wenn die Planenfalthilfe einen Hubholm aufweist, in diesem Fall ist das wenigstens eine zumindest zugsteife Zugelement mit einem distalen Schlitten verbunden und treibt das zusammenfaltbare Verdeckgestell einseitig an.

Zweckmäßiger Weise fixiert das wenigstens eine zumindest zugsteife Zugelement den oder die angeschlossenen Schlitten in ihrer Lage, wenn das rotierbare Teil in einer Drehwinkelposition blockiert ist. Hierdurch ist es nicht erforderlich, eine manuell auslösbare Verriegelung vorzusehen.

Der Antrieb umfasst vorzugsweise einen 24-Volt-Motor, der als Standardprodukt im Markt leicht erhältlich ist und auch keinen großen Bauraum erfordert.

Alternativ kann der Antrieb einen Ansatz für eine Handkurbel umfassen, sodass an Stelle des Anflanschens eines Elektro-Motors auch die Handkurbel zum Öffnen und Schließen des Verdeckgestells eingesetzt werden kann.

Gemäß einer ersten bevorzugten Ausgestaltung ist vorgesehen, dass der Aufbau eine obere Dachöffnung des Unterbaus verschließbar begrenzt. In diesem Fall ist die Abdeckung z.B. eine Dachplane, die zum Be- und/oder Entladen geöffnet oder geschlossen werden soll.

In einer alternativen Ausgestaltung ist vorgesehen, dass der Aufbau eine seitliche Dachöffnung des Unterbaus verschließbar begrenzt, beispielsweise eine seitliche Ladeöffnung eines Curtainsiders. In diesem Fall ist die Abdeckung beispielsweise als Seitenplane des Unterbaus ausgebildet.

Die Abdeckung ist zweckmäßiger Weise als faltbare Plane ausgestaltet, es ist aber auch möglich, die Abdeckung aus mehreren gelenkig faltbaren Plattenkörpern auszubilden, die ein faltbares Hartdach aufspannen. Die Leistungsaufnahme des Antriebs zum Falten von Plattenkörpern ist allerdings deutlich höher als bei einer Plane, da nicht nur die bewegten Massen höher sind, sondern darüber hinaus die fehlende Flexibilität der Plattenkörper die Kinematik hemmt.

Das Verdeckgestell kann auch in beide Richtungen öffenbar ausgestaltet sein, indem nicht nur der distale Schlitten zum Eskamotieren des Verdeckgestells angetrieben werden kann, sondern auch ein proximaler Schlitten. In diesem Fall ist die Verbindung des wenigstens einen zumindest zugsteifen Zugelements mit den Schlitten entsprechend so auszugestalten, dass die Verbindung den Schlitten nur in eine Richtung mitnimmt und nicht auch in die andere. Dadurch kann dann das Zugelement in beide Richtungen zum Antreiben des einen und/oder des anderen Schlittens genutzt werden.

Gemäß einer bevorzugten Ausgestaltung ist vorgesehen, dass das wenigstens eine zumindest zugsteife Zugelement unmittelbar mit dem Schlitten verbunden ist, sodass die Übertragung der Kraft des Antriebs über das Zugelement mit wenig zwischengeschalteten Elementen auf den distalen Schlitten erfolgen kann. Alternativ ist es möglich, den Schlitten mit einem Verbindungsteil auszustatten, das von dem Schlitten beispielsweise nach unten absteht und das in den Verlagerungsbereich des Zugelements reicht, sodass es nicht erforderlich ist, das Zugelement unmittelbar in Höhe des Schlittens an dem Unterbau beziehungsweise an der Führung zu verlegen. In einer günstigen Ausgestaltung ist weiterhin vorgesehen, dass das zugsteife Zugelement mit einem Hebel gekoppelt ist, der schwenkbar an dem Schlitten angeschlossen ist. Bei dem Hebel handelt es sich günstiger Weise um den Fortsatz eines ohnehin an dem distalen Schlitten angelegten Teils, beispielsweise einer distalen Abdeckung, die um die Achse Hebels schwenkbar angeordnet ist. Es ist aber auch möglich, den Hebel unabhängig hiervon an dem distalen Schlitten anzulenken.

Das wenigstens eine zumindest zugsteife Zugelement umfasst zweckmäßig eine erste Umlenkeinrichtung, um die das Zugelement gelegt ist, bei der es sich zweckmäßiger Weise um eine distale Umlenkrolle handelt, die im Bereich des distalen Schlittens bei geschlossenem Verdeckgestell angeordnet sein kann. Die erste Umlenkeinrichtung ist zweckmäßig um eine horizontale Achse drehbar und an den Unterbau unmittelbar oder mittelbar befestigt, sodass sich das Zugelement nach Art eines Obertrums oder eines Untertrums endlos über die erste Umlenkeinrichtung bewegen kann.

Vorzugsweise ist das wenigstens eine zumindest zugsteife Zugelement weiter um eine zweite Umlenkeinrichtung gelegt, die vorzugsweise als Umlenkrolle ausgebildet ist, die beispielsweise im Bereich einer den Unterbau verlängernden Partie um eine vertikale Achse drehbar ist, mit der es möglich ist, das Zugelement in eine Richtung umzulenken, die zumindest annähernd senkrecht zu der Erstreckung des Zugelements zwischen der zweiten Umlenkeinrichtung und der ersten Umlenkeinrichtung ist. Auf diese Weise lässt sich auch günstig die eine Längsseite des Unterbaus von dem demselben Zugelement wie die zweite Längsseite des Unterbaus betätigen.

Vorzugsweise ist das wenigstens eine zumindest zugsteife Zugelement auch um eine dritte Umlenkeinrichtung gelegt, bei der es sich vorzugsweise um eine Umlenkrolle handelt, die um eine im wesentlichen vertikale Achse an einem den Unterbau fortsetzenden Bereich drehbar angeschlossen ist, sodass sowohl der obere Trum als auch der untere Trum, die von der ersten Umlenkeinrichtung kommen, mit dem das Zugelement antreibenden Rotationskörper gekoppelt ist. Die Kopplung kann dergestalt erfolgen, dass das Zugelement mit einem von einem Motor angetriebenen ersten Rotationskörper gekoppelt ist, wobei das Zugelement um den ersten Rotationskörper mehrfach gewickelt ist. Wird das Verdeckgestell von zwei Seiten angetrieben, wird das Zugelement von einem von zweiter Umlenkeinrichtung und dritter Umlenkeinrichtung mit einer gegenüberliegenden Umlenkeinrichtung verbunden, und der zurückreichende Teil des Zugelements wird dann mit dem antreibenden ersten Rotationskörper des Antriebs verbunden. Es versteht sich, dass der Antrieb hierbei wie vorstehend im Einzelnen beschrieben ausgebildet sein kann.

Weitere Vorteile, Merkmale, Eigenschaften und Weiterbildungen der Erfindung ergeben sich aus den abhängigen Ansprüchen sowie aus der Beschreibung des nachfolgenden Ausführungsbeispiels.

Die Erfindung wird nachstehend unter Bezugnahme auf die anliegenden Zeichnungen anhand eines bevorzugten Ausführungsbeispiels näher erläutert.
- Fig.1: zeigt eine perspektivische Ansicht eines als Planenaufbau ausgebildeten bevorzugten Ausführungsbeispiels eines öffenbaren Aufbaus.

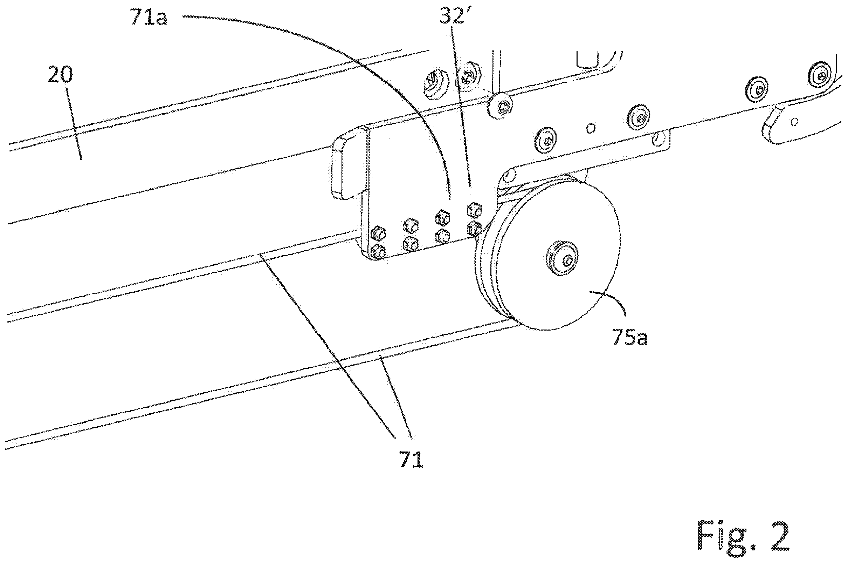

- Fig. 2: zeigt eine perspektivische Ansicht eines Bereichs des distalen Schlittens des Aufbaus aus Fig. 1 von der Seite.

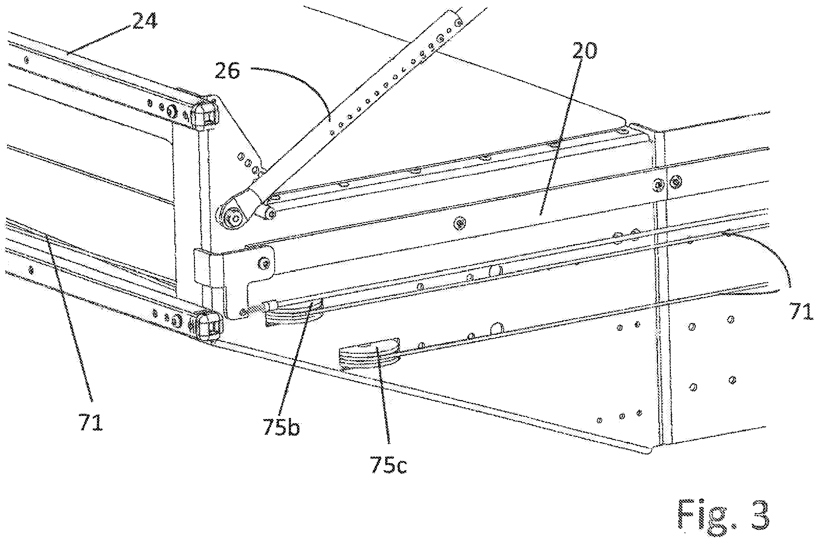

- Fig. 3: zeigt eine perspektivische Ansicht eines heckseitigen Bereichs des Aufbaus aus Fig. 1 von der Seite.
- Fig. 4: zeigt eine perspektivische Ansicht eines heckseitigen Bereichs des Aufbaus aus Fig. 1 von hinten.

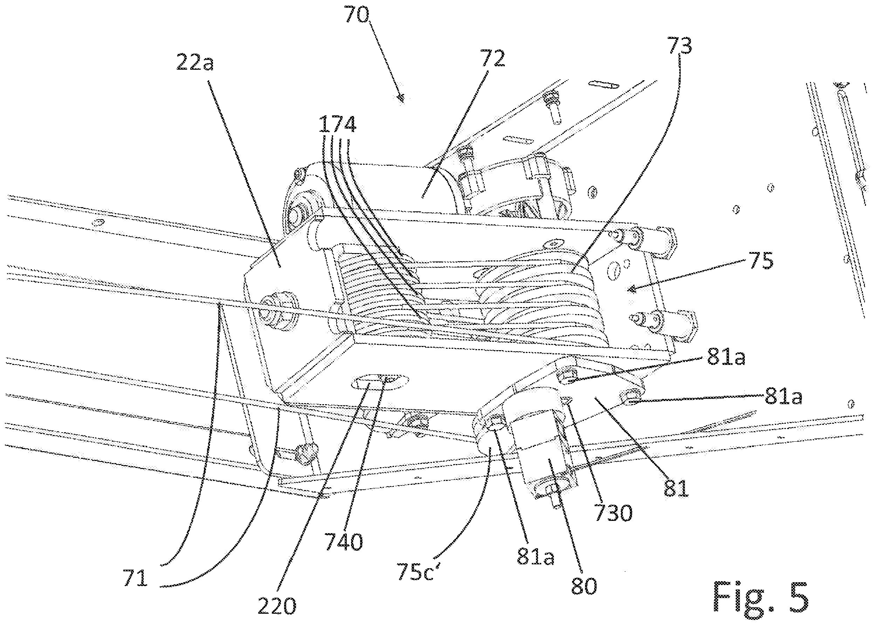

- Fig. 5: zeigt eine perspektivische Ansicht der Antriebseinrichtung des Aufbaus aus Fig. 1.

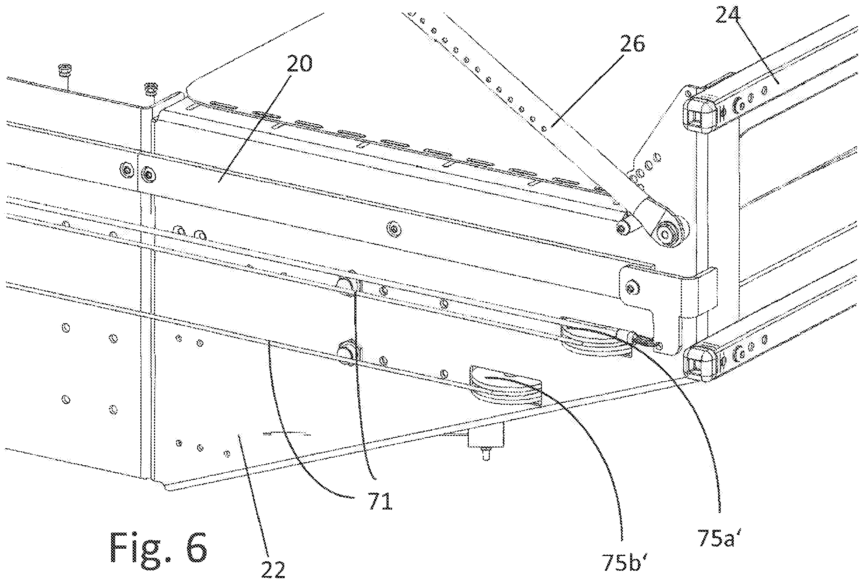

- Fig. 6: zeigt zeigt eine perspektivische Ansicht eines heckseitigen Bereichs des Aufbaus aus Fig. 1 von der Fig. 3 gegenüberliegenden Seite.

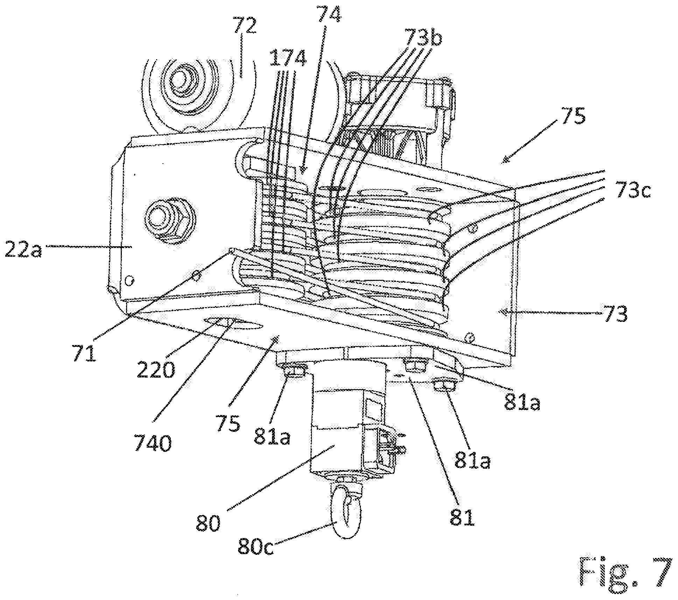

- Fig. 7: zeigt eine perspektivische Ansicht der Antriebseinrichtung des Aufbaus aus Fig. 1.
- Fig. 8: zeigt einen Längssschnitt durch die Antriebseinrichtung.
- Fig. 9: zeigt eine frontale Ansocht eines Bedienfeldes des Aufbaus aus Fig. 1.
- Fig. 10: zeigt eine schematische Darstellung der Führung des Zugelements aus Fig. 1 bis 9.

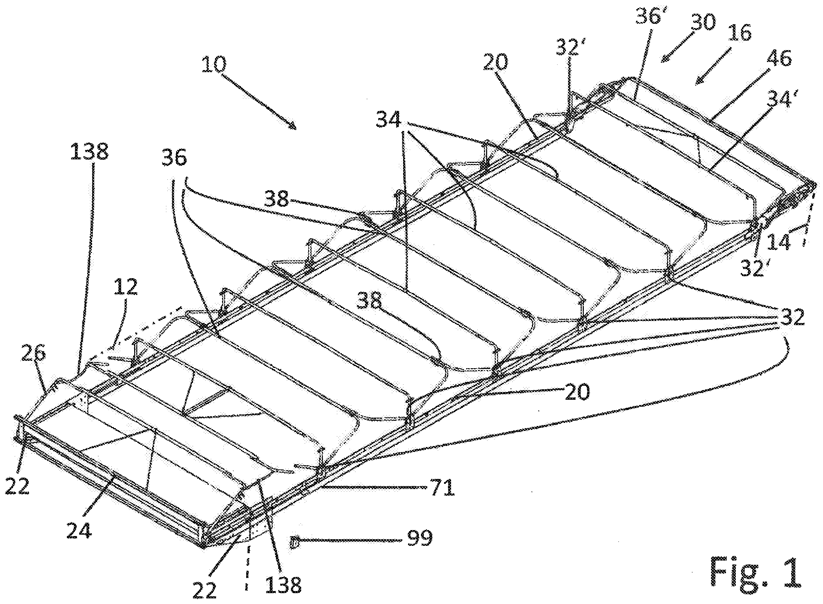

In Fig. 1 ist eine perspektivische Ansicht eines als Planenaufbau 10 ausgebildeten öffnungsfähigen Aufbaus dargestellt, bei dem eine strichpunktiert dargestellte Plane 12 angedeutet ist, die zur besseren Darstellbarkeit in den weiteren Figuren nicht dargestellt ist. Ferner ist gestrichelt der Teil einer Silhouette eines Containers 14 angedeutet, der von einem Verdeckgestell 16 überbaut wird. Der Container 14 ist beispielsweise als Schuttmulde ausgebildet, in der Geröll, aber auch staubende Materialen aufgenommen werden können, weshalb die Abdeckung durch den Planenaufbau 10 zweckmäßig, unter Umständen sogar beim Transport auf einem LKW vorgeschrieben ist. Eine vordere Stirnwand des Containers 14 ist als Muldenklappe ausgebildet, die über ein Schwenkgelenk an den Container 14 angeschlossen ist und die ein Entleeren des Containers durch Abkippen ermöglicht.

Der Planenaufbau 10 weist beiderseits des Containers 14 an dessen seitlicher Außenwand jeweils eine angeschlossene Führungsschiene 20 auf, die aus einer Mehrzahl von Führungsschienenabschnitten besteht, die in einem Abstand zu der Containeraußenwand an dieser festgelegt sind, beispielsweise durch Niete, Schrauben oder andere geeignete Befestigungsmittel, die einen definierten Abstand zu der Außenwand des Containers 14 ermöglichen. Hierdurch ist die Führungsschiene 20 als durchgehendes Teil, zusammengesetzt aus mehreren Teilstücken, mit einem rechteckigen Profil gebildet, die im eingebauten Zustand Ober- und Unterseite als Schmalseiten und die Breitseiten parallel zur Containerwand aufweist.

An dem in Öffnungsrichtung hinteren Ende des Verdeckgestells 16, das in Fig. 1 links dargestellt ist, kragt das Verdeckgestell 16 über das Ende des Containers 14 hinaus, wobei in Verlängerung der Außenwand des Containers 14 eine im Wesentlichen dreieckige Konsole oder Platte 22 auf der Rückseite des Containers 14 angeschlossen ist, an der auch die Führungsschiene 20 sich fortsetzt. Zweck des überkragenden Bereichs ist es, im geöffneten Zustand die gesamte Füllöffnung des Containers 14 vollständig freigeben zu können, indem die noch zu beschreibenden beweglichen Teile des Verdeckgestells 16 dorthin verschoben werden können. Insbesondere sollen keine Teile des Planenaufbaus 10 die Befüllung des Containers 14 behindern. Die dreieckige Platte 22 reicht höher als die Ebene der Führungsschiene 20 und verlängert die seitliche Außenwand des Containers 14 auch in dieser Höhe nach hinten. In der Praxis werden die Seiten eines Containers häufig gemäß der Richtung, in der er verfahren wird, bezeichnet, wobei die Klappe meist auf dem Fahrzeug hinten angeordnet ist; vorliegend wird aber der Bereich, in dem die beweglichen Teile des Verdeckgestells 16 sich bei geöffnetem Planenaufbau 10 sammeln, als hinteres Ende bezeichnet, und das vordere Ende ist dasjenige, das ausgehend von einem geschlossenen Planenaufbau 10 zuerst freigegeben wird.

Weiter ist ein die Containerbreite überspannender Endanschlag 24 vorgesehen, der im Wesentlichen in einer Ebene senkrecht zu den Führungsschienen 20 liegt und eine umgedrehte U-Form aufweist, und mit den Enden des U an den dreieckigen Platten 22 an deren Ende angeschlossen ist.

Das Verdeckgestell 16 weist ferner eine entlang der Führungsschienen 20 bewegliche Schiebeverdeckanordnung 30 auf, die zum Freigeben der Beladeöffnung des Containers 14 geöffnet und zum Abdecken auch wieder verschlossen werden kann.

Die Schiebeverdeckanordnung 30 umfasst eine Mehrzahl von Schlitten 32, die entlang der Führungsschiene 20 verschoben werden können. Jeder bezüglich einer Längshalbierenden, das ist die Ebene, die mittig zwischen den Seitenwänden des Containers 14 angeordnet ist oder diejenige Ebene, die mittig und parallel zu den Führungsschienen 20 verläuft, gegenüberliegende Schlitten 32 ist über einen U-förmigen Holm 34 miteinander verbunden, wobei der Holm 34 zwei gebogene Eckstücke und wahlweise ein langgestrecktes Verbindungsstück aus einem Rundrohr aufweist, die zusammengesteckt sind, wodurch eine günstige Standardisierung der Teile erreicht wird. Alle an den Schlitten 32 vorgesehenen Holme 34 liegen auf derselben Höhe, die in etwa der Höhe der Plane 12 bei geschlossenem Planenaufbau 10 entspricht. Hierzu ist die Plane 12 über geeignete Anschlussmittel mit den Holmen 34 verbunden, beispielsweise über Schnallen oder Gurte oder in der Plane 12 ausgebildete Aufnahmen. Die Zahl der Schlitten 32 und damit der Holme 34 kann je nach Länge des Planenaufbaus 10 variieren.

An jedem Schlitten 32 ist ferner beiderseits des Holms 34 jeweils ein Schwenkbügel 36 über ein Gelenk schwenkbar angelenkt, der ebenfalls über ein Winkelstück und ein langgestrecktes Verbindungsstück jeweils aus einem zylindrischen Rohr zusammengesteckt ist. Auch an dem Endanschlag 24 ist in Höhe der Schlitten 32 ein Schwenkbügel 26 angelenkt, der aber nicht entlang der Führungsschienen 20 verlagerbar ist. Insgesamt ist es möglich, die Schwenkbügel 26, 36 auch gegenüber den Schlitten weiter oben, also an den von den Eckstücken gebildeten Schenkeln der Holme 34, anzuordnen. Bei Planenaufbauten, die zum Beispiel nur eine Ladepritsche überbauen, reichen etwa Bügel aus, die in einer mittleren Höhe der Holme angeschlossen sind. Die Schwenkbügel 26, 36 stehen unter einem flachen Winkel von etwa 30° zur Horizontalen ab und schließen einen Winkel von etwa 60° mit dem zugehörigen Holm 34 bzw. dem Endanschlag 24 ein. Die Schwenkbügel 26, 36 lassen sich jeweils in eine Winkelposition von etwa 90° zur Horizontalen hochschwenken, in dem sie praktisch parallel zu den jeweiligen Holmen 34 oder Endanschlag 24 verlaufen.

An dem vordersten Paar Schlitten 32', die von einem gegenüber den anderen Holmen 34 stabileren Holm 34' miteinander verbunden sind, ist auf der von dem übrigen Verdeckgestell 16 fort weisenden Seite ein Abdeckbügel 46 in einem Gelenk angeschlossen, der zwischen einer herabgeschwenkten, im Wesentlichen horizontalen Position, also etwa 0° Neigung zur Horizontalen, und einer vertikalen Position, also ca. 135° Neigung zur Horizontalen, schwenkbar ist. Die Schwenkbewegung des Abdeckbügels 46 spannt hierbei die Plane 12. Man erkennt, dass der Abdeckbügel 46 wiederum zwei (mehrfach) gebogene Bügelabschnitte und ein langgestrecktes Verbindungsstück umfasst, die beabstandet von dem Holm 34' an einem Rahmenabschnitt des vordersten Schlittens 32' angeschlossen sind. Zwischen der Anlenkung des Abdeckbügels 46 und dem Holm 34' ist ein Hilfsbügel 36' in einem Gelenk angelenkt, der in einem Winkel von ca. 45° gegen die Horizontale absteht.

Eine Besonderheit eines Planenaufbaus 10 für einen Container 14 besteht darin, dass der Container 14 eine hohe Steifigkeit aufweist, sodass das Verdeckgestell 16 den Formänderungen des Containers folgen muss. Diese können durch thermische Ausdehnung, beispielsweise bei heißer Befüllung, oder Deformation des Containers, beispielsweise durch die Masse der Befüllung oder durch mechanische Beschädigung, hervorgerufen werden. Daher ist ein Merkmal des Verdeckgestells, dass die U-förmigen Holme 34, Schwenkbügel 36 und Abdeckbügel 46 eine gewisse federnde Deformation in Y-Richtung, das ist die horizontale Achse quer zur Verlagerungsrichtung (X-Achse), zulassen. Damit kann das Verdeckgestell 16 Toleranzen von bis zu 50 mm ausgleichen, ohne dass es zu einer nachhaltigen Behinderung der Bewegung der Schlitten 32, 32' kommt. Da es bei der Manipulation des Containers 14 auch schon mal zu einer Beschädigung der Führungsschiene 20 kommen kann, ist diese vorteilhaft aus Teilstücken zusammengesetzt, die bei Bedarf jeweils gelöst und ausgetauscht oder geradegebogen werden können. Die vorstehend angegebenen Winkel bezeichnen auch den Winkel der Ebene, in der der Bügel liegt, zur Horizontalen - die Schwenkachse der Gelenke liegt jeweils in Y-Richtung.

Einander zugekehrte Bügel 36 benachbarter Schlitten 32, 32' sind im Bereich der Winkelstücke 36a über zwei Schwenkwinkelbegrenzer 38 miteinander verbunden. Der an den Endanschlag 24 angelenkte Bügel 26 und der hinterste der Bügel 36 sind über eine als Kniegelenk ausgebildete Lenkerkinematik 138 miteinander verbunden.

Beide mit dem vordersten Holm 34' verbundenen Schlitten 32' sind von einem elektrischen Antrieb 70 zum Verlagern der Schiebeverdeckanordnung 30 entlang der Führungsschiene 20 antreibbar. Der Antrieb 70 umfasst ein als endloser Draht, also geschlossen ausgebildetes zugsteifes Zugelement 71 auf, das mit dem vordersten Schlitten 32' über eine Klemmanordnung 71a gekoppelt ist, so dass die Bewegung des Drahts 71 den vordersten oder distalen Schlitten 32' verlagert. Der Antrieb 70 umfasst ferner einen 24 Volt Elektromotor 72, dessen Ausgangswelle 72a mit einer Schnecke 72b gekoppelt ist, die mit einer Eingangswelle 73a eines als ersten Zylinder 73 ausgebildeten ersten Rotationskörpers kämmt. Es ist möglich, dass zwischen dem Motor 72 und dem ersten Zylinder 73 eine Rutschkupplung angeordnet ist, um bei einer mechanischen Überlastung die Teile zu entkoppelt. Es ist möglich, zwischen Motor 72 und Eingangswelle 73a auch ein Getriebe vorzusehen oder andere Verbindungen herzustellen.

An einer der beiden dreieckigen Platten 22 des Unterbaus bzw. Container 14 ist ein Gehäuse 22a angeschlossen, in dem der erste Zylinder 73 und ein als zweiter Zylinder 74 ausgebildeter zweiter Rotationskörper untergebracht sind. Der erste Zylinder 73 und der zweite Zylinder 74 sind jeweils an dem Gehäuse 22a drehbar angeschlossen. Hierbei ist der erste Zylinder 73 ortsfest in dem Gehäuse 22a montiert, während eine Achse 740 des zweiten Zylinders 74 in einem Langloch 220 des Gehäuses 22a untergebracht ist, welches Langloch 220 in seiner Hauptachse zum ersten Zylinder 73 zeigt, so dass der zweite Zylinder 74 entsprechend in seinem Abstand zu dem ersten Zylinder 73 bzw. dessen Achse 730 einstellbar ist. Der erste Zylinder 73 und der zweite Zylinder 74 bilden gemeinsam eine Antriebseinrichtung 75 für das Zugelement 71, das mehrfach um die beiden Zylinder 73, 74 gelegt ist. Hierbei ist das Zugelement 71 nicht vollständig um einen der Zylinder gewickelt, sondern immer alternierend zu etwa 180 Grad um jeden der beiden Zylinder 73, 74.

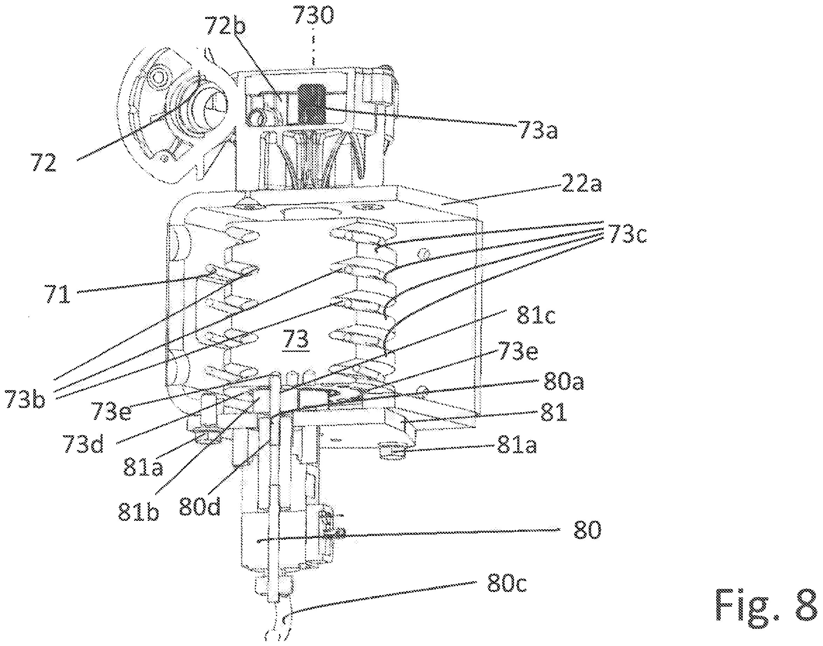

Der erste Zylinder 73 weist eine Mehrzahl von normal zu der Achse 730 des ersten Zylinders 73 verlaufenden Umfangsnuten 73b auf, in denen das Zugelement 71 geführt ist. Die Umfangsnuten 73b weisen eine leicht V-förmige Kontur auf, die das Zugelement 71 leicht klemmend führt. Zwischen benachbarten Nuten 73b sind radiale Stege 73c angeordnet, die verhindern, dass das Zugelement 71 die jeweilige Umfangsnut 73b verlässt. Man erkennt insbesondere in Fig. 8, dass insgesamt fünf Umfangsnuten 73b an den ersten Zylinder 73 ausgebildet sind.

Der zweite Zylinder 74 umfasst vier rotierbare scheibenförmige Zylinderabschnitte 174, die um die Achse 740 unabhängig voneinander rotieren können. Die Zylinderabschnitte 174 sind nach Art eines Pakets von Umlenkrollen ausgebildet. Die Zylinderabschnitte 174 weisen jeweils eine umlaufende Nut 174b zur Führung des Zugelements 71, die ebenfalls V-förmig ausgebildet sein kann, die aber vorliegend als gestufte Vertiefung zwischen zwei Spulenscheibenbereichen ausgebildet ist.

Um zuverlässig eine Kraft von dem Motor 72 in das Zugelement 71 einzuleiten, bilden der erste Zylinder 73 und der zweite Zylinder 74 dadurch eine Antriebseinrichtung 75, dass das Zugelement 71 jeweils eine erste, oberste Nut 73b des Zylinders 73 zu ca. 180° umschlingt, dann einen ersten, obersten Zylinderabschnitt 174 des zweiten Zylinders 74 im Bereich von dessen Nut 174b ca. 180° umschlingt und dann wieder die zweite, zweitoberste Nut 73b des Zylinders 73 zu ca. 180°. Dies wiederholt sich für alle weiteren Nuten 73b und Zylinderabschnitte 174 mit Nuten 174b, bis das Federelement 71 die fünfte, unterste Nut 73b verlässt. Hierdurch wird eine Zugkraft zuverlässig in das Zugelement 71 eingeleitet. Zugleich wird vermieden, dass das Zugelement 71 sich in Folge der Antriebsbewegung um einen einzigen Zylinder verklemmt. Zugleich ist sichergestellt, dass durch die Beabstandung des Zugelements 71 auf den beiden Zylindern 73, 74 ein sich selbst hemmen des Zugelements 71 vermieden ist.

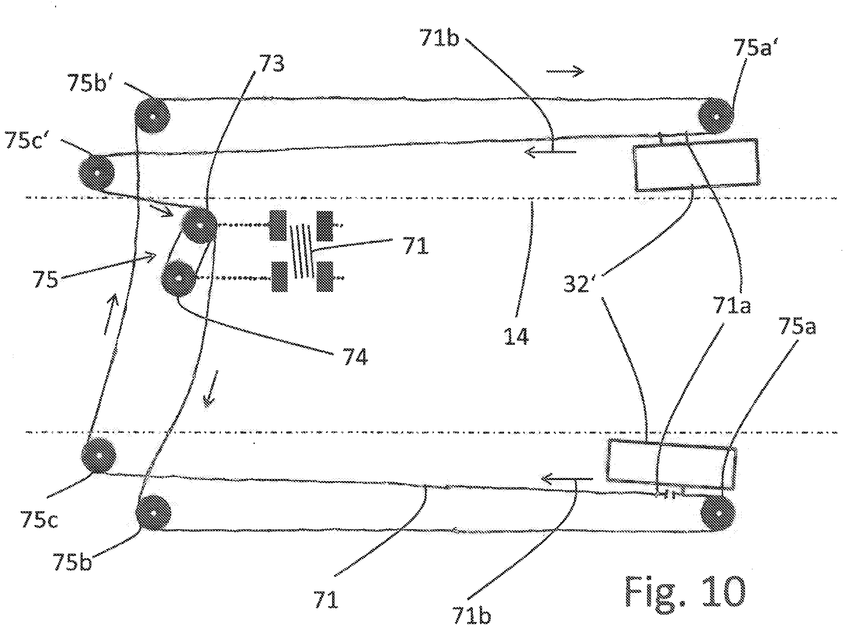

In Fig. 10 ist schematisch dargestellt, wie das Zugelement 71 verlegt ist. Das Zugelement 71 ist im Bereich einer Verbindung 71a mit dem distalen Schlitten 32' verbunden und nimmt diesen in Richtung des Pfeils 71b zum Öffnen des Planenaufbaus 10 beziehungsweise in entgegengesetzter Richtung zum Schließen des Planenaufbaus 10 mit. Das Zugelement 71 ist hierbei um eine distale Umlenkrolle 75a, 75a' gelegt, wobei die beiden von der Umlenkrolle 75a abgehenden Abschnitte jeweils um Umlenkrollen 75b, 75b', 75c, 75c` umgelenkt sind.

Die distale Umlenkrolle 75a, 75a' ist um eine horizontale Achse verdrehbar, sodass das Zugelement 71 im Wesentlichen parallel zu der Führungsschiene 20 verläuft, wie auch in Fig. 1 zu erkennen. Die weiteren Umlenkrollen 75b, 75b', 75c, 75c' sind um vertikale Achsen an jeweils einer der beiden dreieckigen Platten 22 angeschlossen. Das Zugelement 71 wird von der Umlenkrolle 75c der einen Seite zu der Umlenkrolle 75b' der anderen Seite geführt, sodass dasselbe Zugelement 71 die beiden distalen Schlitten 32' antreibt. Das Zugelement 71 wird von der anderen proximalen Umlenkrolle 75c zu einer obersten Nut 73b des ersten Zylinders 73 der Antriebseinrichtung 75 geleitet. Von der vorstehend mehrfach umwickelten Antriebseinrichtung 75 gelangt das Zugelement 71 dann zu der weiteren Umlenkrolle 75c'.

Man erkennt in Fig. 8, dass eine untere Stirnseite 73d des ersten Zylinders 73 einen Kranz mit einer Vielzahl von zylindrischen Löchern 73e aufweist, die in einem festen Radius um die Achse 730 des ersten Zylinders 73 angeordnet sind. An dem den ersten Zylinder 73 einhausenden Gehäuseteil 22a ist eine Tragplatte 81 mittels Schrauben 81a angeschlossen, an der ein elektromagnetischer betätigbarer Hubmagnet 80 angeordnet ist, dessen Hubanker mit einem Sperrstift 80a gekoppelt ist, dessen distales Ende in Richtung auf den ersten Zylinder 73 weist. An der dem ersten Zylinder zugekehrten Seite weist die Tragplatte 81 eine Platte 81b mit einer zylindrischen Bohrung 81c auf, durch die der Sperrstift 80a hindurch verlagert werden kann. Die zylindrischen Bohrung 81c unterstützt den Sperrstift 80a, wenn dieser radialen Kräften ausgesetzt ist, gegen Knicken oder Verbiegen. Der Sperrstift 80a ist an seinem proximalen Ende mit einem Außengewinde ausgestattet, das in ein Innengewinde 80d des Hubankers 80 eingeschraubt.

Der Sperrstift 80a ist gegen die ein rotierbares Teil des Antriebs 70 bildende Stirnseite 73d des ersten Zylinders 73 vorschiebbar, sodass wenn der Sperrstift 80a in eines der Löcher 73e eindringt, der Sperrstift 80a den Antrieb beziehungsweise das wenigstens eine Zugelement 71 gegen Verdrehung sichert und damit den distalen Schlitten 32' blockiert.

Der Hubmagnet 80 ermöglicht es, den Sperrstift 80 zwischen einer vorgeschobenen Position und einer zurückgezogenen Position zu betätigen, sodass je nach Ansteuerung des Hubmagneten 80 der Antrieb 70 freigegeben oder gesperrt sein kann. Hierbei wird durch die Bestromung des Hubmagneten 80 der Sperrstift 80a entgegen der vorgeschobenen Position zurückgezogen, während ein in dem Hubmagneten schon eingebautes Federelement den Sperrstift 80a in Richtung der vorgeschobenen Position beaufschlagt. Wird der erste Zylinder 73 ausreichend langsam gedreht, kann der Sperrstift 80a bei nichtbestromtem Hubmagneten 80 unter der Last des Federelements in die den Sperrstift 80a gegenüberliegende Lochung 73e eindringen und den ersten Zylinder 73 arretieren. Es ist also vorgesehen, dass der Hubmagnet während des Betätigens des Antriebs 70 bestromt ist. Hierzu sind der Antrieb 70 und der Hubmagnet 80 beide mit einer Steuerung 99 des Antriebs 70 verbunden.

Hierbei ist von besonderer Bedeutung, dass der Umfang des Lochs 73e dann radial an dem äußeren Umfang des Sperrstifts 80a, der in das Loch 73e vorsteht, anliegt, wobei die gesamte Last des Verdeckgestells aufgrund der Verbindung mit dem Zugelement 71 und dessen reibender und/oder klemmender Kraftübertragung auf den ersten Zylinder 73 über das Loch 73e auf den Sperrstift 80a lastet. Diese Last ist nicht unerheblich, da neben der eigentlichen Masse des Verdeckgestells 32 die in der Plane 12 gespeicherte Federkraft in die eine oder die andere Verlagerungsrichtung der Schlitten 32' wirken kann, ferner im Fall der Ausgestaltung des Unterbaus 14 als Kippmulde die auf das Verdeckgestell lastende Schwerkraft noch hinzukommen kann.

Vor diesem Hintergrund ist es aufgrund der radial auf den Sperrstift 80a wirkenden Kraft oft nicht möglich, mit dem Hubmagneten 80 den Sperrstift 80a gegen die Last des Federelements des Hubmagneten 80 aus dem entsprechenden Loch 73e zurückzuziehen.

Aus diesem Grund ist eine Steuerung 99 des Antriebs 70 so ausgebildet, dass bei einem Bedienerkommando, die vordersten Schlitten in eine bestimmte Richtung zu verfahren, zunächst ein kurzer Verfahrweg oder ein kurzer Verfahrimpuls in die entgegengesetzte Richtung veranlasst wird, der bei entsprechender Belastung des Umfangs des Sperrstifts 80a zu dessen Entlastung führt, sodass der Hubmagnet 80 den Sperrstift 80a außer Eingriff mit dem ersten Zylinder 73 verlagern kann. Ist die Belastung hingegen in der entgegengesetzten Richtung, führt die anschließende eigentliche Verlagerungsbewegung des Antriebs 70 dazu, dass der Sperrstift 80a freigegeben wird, mit dem Ergebnis, dass dann der Hubmagnet 80 den Sperrstift 80a zurückziehen kann.

Das vorstehend beschriebene Verfahren zum Steuern der Öffnungs- oder Schließbewegung des öffenbaren Aufbaus 10 bzw. des öffnungsfähigen Aufbaus 10 ist beispielsweise als Programm in der Steuerung 99 gespeichert.

Der Sperrstift 80a ist mit einem aus dem dem ersten Zylinder 73 abgekehrten Ende des Hubmagneten 80 herausragenden, als Ring ausgebildeten Zugende 80c ausgestattet, das auch ein manuelles Entriegeln des Sperrstifts 80a ermöglicht. Auf diese Weise kann auch bei einer Störung der Elektrik die Öffnung des Aufbaus 10 freigegeben werden.

Man erkennt, dass der Sperrstift 80a den rotierbaren ersten Zylinder 73 formschlüssig blockiert und insbesondere verhindert, dass der Antrieb 80 den ersten Zylinder 73 zu einer Relativbewegung bezüglich des Zugelements 71 veranlasst. Daher ist das Blockieren des ersten Zylinders 73 die bevorzugte Möglichkeit, das Zugelement 71 gleichzeitig zu blockieren und zu verhindern, dass es zu einer Bewegung im System des Antriebs 70 und der Umlenkrollen 75a, 75b, 75c kommt.

Der Hubmagnet 80 ist zweckmäßiger Weise durch Anlegen einer elektrischen Spannung betätigbar und ist mit einer Steuerung des Antriebs verbunden, sodass die Bewegung des Antriebs 70 und die Verlagerungsarbeit des Hubmagneten 80 aufeinander abgestimmt werden können. Zugleich sind beide Teile mit einem Signalgeber ausgestattet, der die Steuerung informiert, ob der Sperrstift 80a des Hubmagneten 80 in den ersten Zylinder 73 eingerückt ist oder nicht.

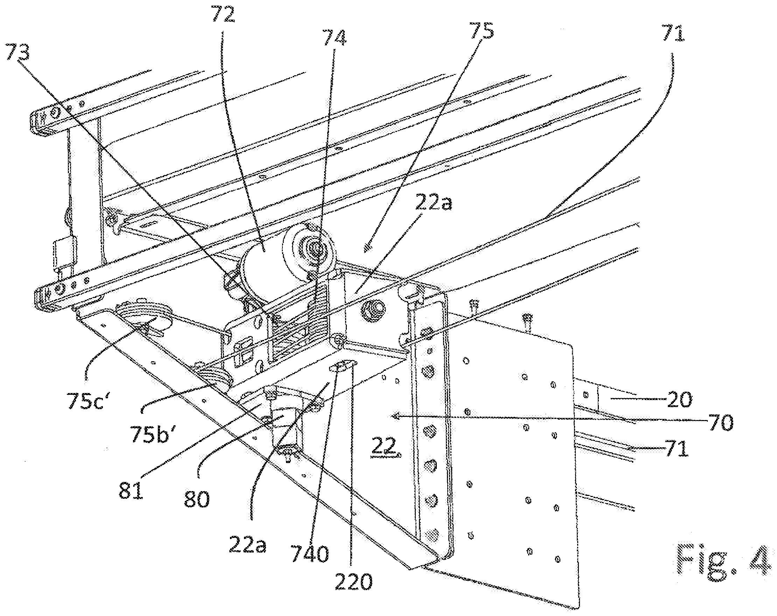

Man erkennt in Fig. 4, dass auf der Oberseite des Gehäuses 22a der Motor 72 angeschlossen ist, während auf der Unterseite des Gehäuses 22a die Tragplatte 81 mit dem Hubmagneten 80 angeschlossen ist.

Im Bereich der Klemmanordnung 71a ist ferner ein Magnet verbaut, der von einer Sensoreinrichtung zur Bestimmung des Lage des distalen Schlittens 32' und damit des Öffnungsgrades des Verdeckgestells 16 erfasst werden kann.

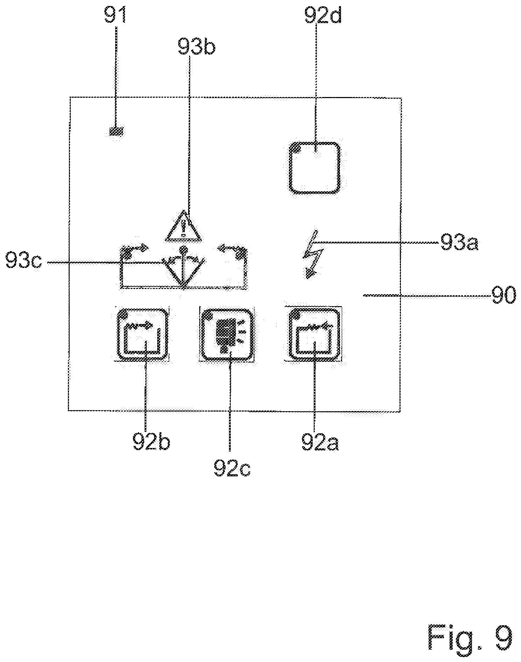

Ferner weist der Antrieb 70 eine als Gyroskop ausgebildet Sensoranordnung 91 auf, die im Bereich eines Bedienfeldes 90, das in Fig. 9 dargestellt ist, untergebracht ist. Die Sensoranordnung 91 kann auch an anderer Stelle in dem Aufbau10, dem Unterbau 14 oder einem diese transportierenden Fahrzeug untergebracht sein.

Die Sensoranordnung 91 ist mit der Steuerung 99 des Antriebs 70 verbunden. Die Sensoranordnung 91 kann die Neigung des Aufbaus 10 zur Horizontalen ermitteln. In der Steuerung sind Grenzwerte für zulässige Neigungswinkel gespeichert, bei deren Überschreitung der Antrieb 70 außer Betrieb gesetzt ist. Das Bedienfeld ist nahe der Antriebseinrichtung 75 angebracht, es ist aber zusätzlich oder statt dessen möglich, ein Bedienfeld 90 auch im Führerhaus eines den Unterbau 14 transprotierenden Fahrzeugs unterzubringen.

Das Bedienfeld 90 umfasst eine erste Taste 92a zum Verlagern des Verdeckgestells mittels des Antriebs 70 in Öffnungsrichtung und eine zweite Taste 92b zum Verlagern des Verdeckgestells mittels des Antriebs 70 in Schließrichtung. Beide Tasten 92a, 92b sind mit der Steuerung 99 des Antriebs 70 verbunden. Eine weitere Taste 92c ermöglicht das An- oder Ausschalten eines den Innenbereich des Unterbaus 14 beleuchtenden Scheinwerfers. Eine weitere Taste 92d ermöglicht das An- oder Ausschalten eines den Innenbereich des Unterbaus 14 beobachtenden Kamera.

Eine Anzeige 93a auf dem Bedienfeld 90 signalisiert bei Leuchten eine Störung in der Elektrik. Eine weitere Anzeige 93b signalisiert bei Leuchten eine sonstige Störung. Eine andere Anzeige 93c signalisiert bei Leuchten ein Überschreiten des zulässigen Neigungswinkels. Alle Tasten und Anzeigen sind mit der Steuerung 99 des Antriebs 70 verbunden. Das Bedienfeld ist nahe der Antriebseinrichtung 75 angeordnet.

Der Antrieb 70 einschließlich des Motors 72 ist an den Nutzausgang einer 24 Volt Energiequelle des den Unterbau 14 transportierenden Fahrzeugs angeschlossen, sodass es nicht erforderlich ist, den Unterbau 14, den Aufbau 10 oder die in Fig. 1 mit 99 bezeichnete Steuerung mit einer eigenen Energiequelle auszustatten. Der Nutzausgang der Fahrzeugbatterie eines LKWs ist allerdings auf eine bestimmte Leistungsaufnahme begrenzt, da die üblichen Anwendungen wie Suchscheinwerfer und dergleichen keine großen Leistungsaufnahmen darstellen. Meist ist der Nutzausgang mit 20 Ampere abgesichert.

Damit die Sicherung nicht anschlägt, ist in günstigerweise vorgesehen, dass ein erster Schwellenwert für die Stromaufnahme des Antriebs 70 eingestellt ist, der die Leistungsaufnahme des Antriebs 70 im gewöhnlichen Betrieb begrenzt. Der erste Schwellenwert liegt je nach Auslegung bei ca. 85 % bis 100 %des abgesicherten Stroms und vorliegend bei dem Nennstrom des Motors 72, 10 Ampere.

Bestimmte Abschnitte des Verfahrwegs des Verdeckgestells 16 entlang der Führung 20 erfordern jedoch die Bewältigung von Arbeitsspitzen, die mit der durch den ersten Schwellenwert begrenzten Leistungsaufnahme möglicherweise nicht bewältigt werden können. Dies kann infolge der Umstände der Fall sein, beispielsweise wenn Eis oder Schnee die Plane 12 bedeckt, oder aber wenn der Unterbau 14 und der Aufbau 10 so abgestellt sind, dass eine Steigung bewältigt werden muss oder aber die Last der Gewichtskraft ungleichmäßig auf die beiden vorderen Schlitten 32' verteilt ist. Des Weiteren sind Arbeitsspitzen zu verzeichnen, wenn die Öffnungsbewegung angefahren wird, da das relativ massive Abdeckglied 46 des Verdeckgestells 16 in eine angehobene Position geschwenkt werden muss, wobei die Schwenkarbeit durch einen Anschlag, gegen den ein Hebel des Abdeckglieds 46 anschlägt, aufgebracht werden muss. Eine weitere Arbeitsspitze kann sich ergeben, wenn die Planenfalthilfe für die Plane 12, die durch die beiden über die Schwenkwinkelbegrenzer 38 miteinander verbundenen Bügel 36 verwirklicht ist, aufgestoßen werden muss. Bei dem vorliegenden Ausführungsbeispiel ist die Arbeitsspitze gering, sind aber die Planenfalthilfen in einer horizontalen, dem Totpunkt nahen Stellung angeordnet, gestaltet sich das Aufrichten energieintensiver.

Um zu vermeiden, dass der Motor 72 überlastet, ist vorgesehen, dass ein erster Zeitraum, in dem die Leistungsaufnahme des Antriebs im gewöhnlichen Betrieb und damit der erste Schwellenwert für die Stromaufnahme dennoch überschritten werden darf, um Arbeitsspitzen zu bewältigen, nicht länger als 3 Sekunden beträgtHierbei ist weiter vorgesehen, dass während des ersten Zeitraums ein zweiter Schwellenwert für die Stromaufnahme des Antriebs 20 Ampere nicht überschritten wird, um zu vermeiden, dass die Sicherung der Energieversorgung ausgelöst wird. In der Praxis reicht es aus, wenn die zusätzliche Leistung nur für einige Zehntelsekunden bereitgestellt wird. Es ist möglich, aber nicht notwendig, den zweiten Schwellenwert für die Stromaufnahme bei ca. 85% des maximalen Werts auszuwählen, also z.B. bei 17 Ampere. Die Sicherung des Bordnetzes ist relativ träge ist und die Temperaturentwicklung im Bereich der Bordelektrik fällt nicht sehr stark aus.

Zweckmäßig ist vorgesehen, dass zwischen zwei sukzessiven ersten Zeiträumen ein Mindestzeitintervall vorgesehen ist, das verhindert, dass in zu kurzer Folge Überschreitungen des ersten Schwellenwerts bei der Leistungsaufnahme des Antriebs eintreten, wobei das Mindestzeitintervall entsprechend der Länge des ersten Zeitraums ausgewählt ist, also zu 3 Sekunden. Soll also die Steuerung 99 das Aufstoßen des Abdeckgliedes 48 sowie das Anheben der Planenfalthilfen 36 bewerkstelligen, ergibt sich ein entsprechend langsames Verfahren des distalen Schlittens 32' über die gesamte Länge der Führung 20, bis das Verdeckgestell 16 vollständig zusammengefaltet und die entsprechende Öffnung des Unterbaus freigegeben ist.

Es ist möglich, die Werte für den ersten Zeitraum und für das Mindestzeitintervall entsprechend kürzer vorzusehen, wenn das Verdeckgestell 16 insgesamt schneller geöffnet werden kann bzw. soll. Es ist ferner möglich, einen stärkeren Motor 72 zu verbauen, der einen höheren Nennstrom von z.B. 20 Ampere aufweist, so dass die Nennleistung in etwa verdoppelt ist. Für Arbeitsspitzen kann dann dennoch der Betrag der Stromaufnahme während des ersten Zeitraums über 20 Ampere angehoben werden.

Alternativ kann die voraussichtliche Leistungsaufnahme des Antriebs 70 von der Steuerung 99 auch in einer Rechenoperation ermitteln werden, wodurch sich die Antriebsgeschwindigkeit des Zugelements 71 von dynamisch ermittelten Parametern erster Schwellenwert und erster Zeitraum einstellen lässt.

Durch die vorstehende Ausgestaltung wird insbesondere erreicht, dass selbst dann, wenn ein Bedienperson mehrfach die Öffnungsrichtung wechselt und damit einen längeren Zeitraum im Bereich des Anhebens wahlweise des Abdeckgliedes 46 oder der Planenfalthilfe 36, 38 verbringt, gleichwohl die zulässige Leistungsaufnahme der Fahrzeugbatterie nicht überschritten wird.

Zugleich kann die Leistungsausnahme des Antriebs von der Steuerung überwacht werden, um festzustellen, ob unvorhergesehene Hindernisse das Öffnen und Schließen des Aufbaus 10 behindern oder blockieren.

Weiterhin sieht die Steuerung vor, dass eine den ersten Schwellenwert übersteigende Leistungsaufnahme des Antriebs auch dann ermöglicht ist, wenn der Antrieb gestoppt wird, um in jedem Fall sicher zu stellen, dass der Sperrstift 80a in den ersten Rotationskörper 73 einrückt.

Die entsprechenden Befehle können von einem Benutzer über das Bedienfeld 90 eingegeben werden, es ist jedoch über einen nicht dargestellten Bluetooth-Hotspot möglich, die Bedienfehle auch über einen externen Computer einzugeben, wenn sich dieser mit dem Hotspot verbunden hat. In gleicher Weise können die Bilder der Kamera und die weiteren Daten an den Computer, bei dem es sich auch um ein Tablet-PC oder ein Smartphone handeln kann, dargestellt werden.

Die Erfindung ist vorstehend anhand eines Ausführungsbeispiels beschrieben worden, bei dem die Verriegelung der distalen Schlitten 32' über den Sperrstift 80a, den ersten Rotationskörper 73 und das Zugelement 71 erfolgt. Es versteht sich, dass darüber hinaus auch eine mechanische Verriegelung des Verdeckgestells mit dem Unterbau zusätzliche vorgesehen sein kann.

Die Erfindung ist vorstehend anhand eines Ausführungsbeispiels erläutert worden, bei dem die Öffnungs- und Schließbewegung ausgehend von dem distalen Schlitten 32' möglich ist. Es versteht sich, dass in einer anderen Ausführung auch der proximale Schlitten 32 des Verdeckgestells mit dem Zugelement 71 gekoppelt sein kann, sodass das Verdeckgestell auch in die andere Richtung oder in beide Richtungen geöffnet werden kann.

Die Erfindung ist vorstehend anhand eines Ausführungsbeispiels beschrieben worden, bei dem das Zugelement 71 das Verdeckgestell an beiden distalen Schlitten 32', die über den Holm 34' miteinander verbunden sind, antreibt. Ist das Verdeckgestell ausreichend stabil ausgebildet, kann der Antrieb auch nur von einer Seite erfolgen, wobei dann ein Endlaufwagen des Verdeckgestells für eine gleichmäßige Übertragung der Kraft auf die beiderseits angeordneten Schlitten Sorge trägt.

Die Erfindung ist vorstehend anhand eines Ausführungsbeispiels beschrieben worden, bei dem die Holme 34, 34' im Wesentlichen als U-förmige Bügel ausgebildet sind. Es versteht sich, dass anstelle der U-förmigen Bügel auch langgestreckte Spriegel die gegenüberliegenden Schlitten 32 miteinander verbinden können, die dann von den Schlitten nicht mehr nach oben abgehen. Es ist ferner möglich, dass die bezüglich einer Längshalbierenden des Planenaufbaus gegenüberliegenden Schlitten gar nicht von einem unbeweglichen Holm miteinander verbunden sind, sondern lediglich über ein gelenkig mit den Schlitten verbundenen Bügel wie beispielsweise den Bügel 36. Hierbei kann die gelenkige Verbindung allerdings auf Faltplatten umfassen, wie sie von Schiebeverdecken für LKW-Aufbauten bekannt sind, die einen sogenannten Hubspriegel tragen.

Die Erfindung ist vorstehend anhand eines Ausführungsbeispiels beschrieben worden, bei dem eine Bedienperson die Steuerung mit Befehlen zum Öffnen und Schließen des Verdeckgestells steuert. Es versteht sich, dass insbesondere bei selbstfahrenden Systemen die Befehle auch automatisiert beziehungsweise computergesteuert erteilt werden können, beispielsweise wenn ein selbstfahrendes Nutzfahrzeug be- oder entladen werden soll.

## Patentansprüche

1. Öffenbarer Aufbau für einen Unterbau (14), wie ein selbstfahrendes Lastfahrzeug, einen Lastkraftwagen, einen Auflieger, einen Anhänger, einen Container, eine Kippmulde, einen Bahnwaggon, ein Gebäude oder dergleichen, umfassend
ein zusammenfaltbares Verdeckgestell (16),
eine an das Verdeckgestell (16) anschließbare Abdeckung (12), insbesondere eine Plane, und
einen Antrieb (70) zum Ein- und/oder Ausfalten des Verdeckgestells (16),
wobei der Antrieb (70) wenigstens ein zumindest zugsteifes Zugelement (71) zu einer Bewegung veranlasst,
wobei das wenigstens eine zumindest zugsteife Zugelement (71) mit einem distalen Schlitten (32`) des Verdeckgestells (16) koppelbar ist und den distalen Schlitten (32`) in Abhängigkeit von einer Betätigungsrichtung des Antriebs (70) vor und/oder zurück bewegt,
wobei der Antrieb (70) einen angetriebenen ersten Rotationskörper (73) umfasst,
wobei der Antrieb (70) einen zweiten Rotationskörper (74) umfasst, und
wobei der erste Rotationskörper (73) und der zweite Rotationskörper (74) zueinander benachbart angeordnet sind und eine Antriebseinrichtung (75) bilden,
**dadurch gekennzeichnet,**
**dass** das wenigstens eine zumindest zugsteife Zugelement (71) mehrfach alternierend zu etwa 180 Grad um den ersten Rotationskörper (73) und zu etwa 180 Grad um den zweiten Rotationskörper (74) gewickelt ist.

2. Öffenbarer Aufbau nach Anspruch 1, **dadurch gekennzeichnet, dass** das wenigstens eine zumindest zugsteife Zugelement (71) wenigstens drei mal alternierend zu etwa 180 Grad um den ersten Rotationskörper (73) und zu etwa 180 Grad um den zweiten Rotationskörper (74) gewickelt ist.

3. Öffenbarer Aufbau nach Anspruch 1 oder 2, **dadurch gekennzeichnet, dass** der zweite Rotationskörper (74) durch das wenigstens eine zumindest zugsteife Zugelement (71) angetrieben ist, dass der erste Rotationskörper (73) von einem Motor (72) des Antriebs (70) in Rotation versetzbar ist, und dass das wenigstens eine zumindest zugsteife Zugelement (71) als endloses, geschlossenes Zugelement (71) ausgebildet ist.

4. Öffenbarer Aufbau nach einem der vorhergehenden Ansprüche, **dadurch gekennzeichnet, dass** der erste Rotationskörper als Zylinder (73) ausgebildet ist und Umfangsnuten (73b) aufweist, in denen das wenigstens eine zumindest zugsteife Zugelement (71) geführt ist.

5. Öffenbarer Aufbau nach Anspruch 4, **dadurch gekennzeichnet, dass** zwischen benachbarten Umfangsnuten (73b) radiale Stege (73c) angeordnet sind, die verhindern, dass das wenigstens eine zumindest zugsteife Zugelement (71) die jeweilige Umfangsnut (73b) verlässt.

6. Öffenbarer Aufbau nach einem der vorhergehenden Ansprüche, **dadurch gekennzeichnet, dass** der erste Rotationskörper (73) und der zweite Rotationskörper (74) parallele Achsen (730; 740) aufweisen.

7. Öffenbarer Aufbau nach einem der vorhergehenden Ansprüche, **dadurch gekennzeichnet, dass** der erste Rotationskörper (73) und/oder der zweite Rotationskörper (74) zur Justierung der Länge des zumindest zugsteifen Zugelements (71) einen zueinander veränderlichen Abstand aufweisen.

8. Öffenbarer Aufbau nach einem der vorhergehenden Ansprüche, **dadurch gekennzeichnet, dass** der zweite Rotationskörper (74) in Richtung auf den ersten Rotationskörper (73) verlagerbar ist, und dass durch eine Verlagerung des zweiten Rotationskörpers (74) die Spannung des wenigstens einen zumindest zugsteifen Zugelements (71) einstellbar ist.

9. Öffenbarer Aufbau nach einem der vorhergehenden Ansprüche, **dadurch gekennzeichnet, dass** zwischen dem ersten Rotationskörper (73) und dem zweiten Rotationskörper (74) ein Federglied angeordnet ist, das den zweiten Rotationskörper (74) in eine Richtung fort von dem ersten Rotationskörper (73) beaufschlagt und damit eine Spannung des wenigstens einen zumindest zugsteifen Zugelements (71) erreicht.

10. Öffenbarer Aufbau nach einem der vorhergehenden Ansprüche, **dadurch gekennzeichnet, dass** zumindest der zweite Rotationskörper (74) eine Mehrzahl von unabhängig rotierbaren scheibenförmigen Zylinderabschnitten (174) umfasst, wobei der scheibenförmige Zylinderabschnitt (174) jeweils von dem wenigstens einen zumindest zugsteifen Zugelement (71) umschlungen ist.

11. Öffenbarer Aufbau nach einem der vorhergehenden Ansprüche, **dadurch gekennzeichnet,**
**dass** ein Sperrstift (80a) vorgesehen ist, der gegen ein Teil des ersten Rotationskörpers (73) vorschiebbar ist,
**dass** der Sperrstift (80a) den ersten Rotationskörper (73) gegen Verdrehung sichert und damit den Schlitten (32`) auch in einem nicht angetriebenen Zustand des Antriebs (70) blockiert, und
**dass** der Sperrstift (80a) von einem Federelement in die vorgeschobene Position belastet ist, und dass der Sperrstift (80a) durch eine Hubeinrichtung (80) entgegen der Last des Federelements aus der vorgeschobenen Position zurückziehbar ist.

12. Öffenbarer Aufbau nach Anspruch 11, **dadurch gekennzeichnet, dass** der Sperrstift (80a) einen angetriebenen ersten Rotationskörper (73) des Antriebs (70) blockiert, und dass der Sperrstift (80a) in eine Ausnehmung (73e) des ersten Rotationskörpers (73) vorschiebbar ist.

13. Öffenbarer Aufbau nach einem der Ansprüche 11 bis 12, **dadurch gekennzeichnet, dass** zur Freigabe des Sperrstiftes (80a) der Antrieb (70) erst entgegen der beabsichtigten Verlagerungsrichtung bewegbar ist, und dass der Sperrstift (80a) dadurch zumindest vorübergehend entlastet ist, um den Sperrstift (80a) zurückziehen zu können.

14. Öffenbarer Aufbau nach einem der vorhergehenden Ansprüche, **dadurch gekennzeichnet,**
**dass** ein erster Schwellenwert für eine Stromaufnahme des Antriebs (70) vorgesehen ist, der die Leistungsaufnahme des Antriebs (70) im gewöhnlichen Betrieb begrenzt, und
**dass** eine den ersten Schwellenwert übersteigende Leistungsaufnahme des Antriebs (70) für die Dauer eines ersten Zeitraums zugelassen ist, um Arbeitsspitzen zu bewältigen.

15. Öffenbarer Aufbau nach Anspruch 14, **dadurch gekennzeichnet, dass** ein zwischen zwei sukzessiven ersten Zeiträumen, in denen eine den ersten Schwellenwert übersteigende Leistungsaufnahme zugelassen ist, ein Mindestzeitintervall vorgesehen ist, in dem die Leistungsaufnahme des Antriebs (70) im gewöhnlichen Betrieb begrenzt ist, und dass das Mindestzeitintervall wenigstens genau so lange dauert wie der erste Zeitraum.

16. Öffenbarer Aufbau nach einem der vorhergehenden Ansprüche, **dadurch gekennzeichnet, dass** das wenigstens eine zumindest zugsteife Zugelement (71) mit zwei distalen Schlitten (32`), die an einen gemeinsamen Holm (34) angeschlossen sind, verbunden ist und die beiden distalen Schlitten (32`) gleichzeitig antreibt.

## Claims

1. Openable superstructure for a substructure (14), such as a self-propelled truck, a truck, a semitrailer, a trailer, a container, a dump truck, a railway wagon, a building or the like; comprising
a collapsible top frame (16),
a cover (12), in particular a tarpaulin, which can be connected to the top frame (16), and
a drive (70) for folding in and/or out the top frame (16),
wherein the drive (70) causes at least one tension element (71) which is at least tension-resistant to move,
wherein the at least one tension element (71) which is at least tension-resistant can be coupled to a distal carriage (32') of the top frame (16) and moves the distal carriage (32') back and/or forth as a function of an actuation direction of the drive (70),
wherein the drive (70) comprises a driven first rotating body (73),
wherein the drive (70) comprises a second rotating body (74),
and
whereinthe first rotating body (73) and the second rotating body (74) are arranged adjacent to one another and form a drive device (75), **characterized in**
**that** the at least one tension element (71) which is at least tension-resistant is wound several times alternatingly at approximately 180 degrees around the first rotating body (73) and at approximately 180 degrees around the second rotating body (74).

2. Openable superstructure according to claim 1, **characterized in that** the at least one tension element (71) which is at least tension-resistant is wound at least three times alternatingly at approximately 180 degrees around the first rotating body (73) and at approximately 180 degrees around the second rotating body (74).

3. Openable superstructure according to claim 1 or 2, **characterized in that** the second rotating body (74) is driven by the at least one tension element (71) which is at least tension-resistant, that the first rotating body (73) can be set into rotation by a motor (72) of the drive (70), and that the at least one tension element (71) which is at least tension-resistant is designed as an endless, closed tension element (71).

4. Openable superstructure according to one of the preceding claims, **characterized in that** the first rotating body is designed as a cylinder (73) and has circumferential grooves (73b) in which the at least one tension element which is at least tension-resistant (71) is guided.

5. Openable superstructure according to claim 4, **characterized in that** radial webs (73c) are arranged between adjacent circumferential grooves (73b), which prevent the at least one tension element (71) that is at least tension-resistant from leaving the respective circumferential groove (73b).

6. Openable superstructure according to one of the preceding claims, **characterized in that** the first rotating body (73) and the second rotating body (74) have parallel axes (730; 740).

7. Openable superstructure according to one of the preceding claims, **characterized in that** the first rotating body (73) and/or the second rotating body (74) have a mutually variable distance to adjust the length of the tension element (71) which is at least tension-resistant.

8. Openable superstructure according to one of the preceding claims, **characterized in that** the second rotating body (74) can be displaced in the direction of the first rotating body (73), and that by displacing the second rotating body (74), the tension of the at least one tension element (71) that is at least tension-resistant is adjustable.

9. Openable superstructure according to one of the preceding claims, **characterized in that** a spring member is arranged between the first rotating body (73) and the second rotating body (74) which acts on the second rotating body (74) in a direction away from the first rotating body (73) and thus a tension of the at least one tension element (71) which is at least tension-resistant is achieved.

10. Openable superstructure according to one of the preceding claims, **characterized in that** at least the second rotating body (74) comprises a plurality of independently rotatable disk-shaped cylinder sections (174), wherein the disk-shaped cylinder section (174) is wrapped around by the at least one tension element (71) which is at least tension-resistant.

11. Openable superstructure according to any of the preceding claims, **characterized in**
**that** a locking pin (80a) is provided which can be advanced against part of the first rotating body (73),
**that** the locking pin (80a) secures the first rotating body (73) against rotation and thus blocks the carriage (32') even when the drive (70) is not driven, and
**that** the locking pin (80a) is loaded into the advanced position by a spring element, and that the locking pin (80a) is retractable from the advanced position by a lifting device (80) against the load of the spring element.

12. Openable superstructure according to claim 11, **characterized in that** the locking pin (80a) blocks a driven first rotating body (73) of the drive (70), and that the locking pin (80a) can be advanced into a recess (73e) of the first rotating body (73).

13. Openable superstructure according to one of claims 11 to 12, **characterized in that** to release the locking pin (80a) the drive (70) can initially be moved counter to the intended displacement direction, and that the locking pin (80a) is thereby at least temporarily relieved, in order to be able to retract the locking pin (80a).

14. Openable superstructure according to any of the preceding claims, **characterized in**
**that** a first threshold value for a current consumption of the drive (70) is provided, which limits the power consumption of the drive (70) in normal operation, and
**that** a power consumption of the drive (70) that exceeds the first threshold value is permitted for the duration of a first period in order to cope with work peaks.

15. Openable superstructure according to claim 14, **characterized in that** a minimum time interval is provided between two successive first periods in which a power consumption exceeding the first threshold value is permitted, in which time interval the power consumption of the drive (70) is limited in normal operation, and that the minimum time interval is at least as long as the first period.

16. Openable superstructure according to one of the preceding claims, **characterized in that** the at least one tension element (71) which is at least tension-resistant, is connected to two distal carriages (32') which are connected to a common strut (34) and drives the two distal carriages (32') simultaneously.

## Revendications

1. Structure ouvrable pour une infrastructure (14), tel qu'un véhicule poids lourd autoconducteur, un camion, une semi-remorque, une remorque, un conteneur, un camion à benne basculante, un wagon ferroviaire, un bâtiment ou semblable, ladite structure ouvrable comprenant
un bâti de capote repliable (16),
une couverture (12), en particulier une bâche, pouvant être raccordée au bâti de capote (16), et
un entraînement (70) pour le pliage et/ou le dépliage du bâti de capote (16),
l'entraînement (70) provoquant un mouvement d'au moins un élément de traction (71) au moins rigide à la traction,
l'au moins un élément de traction (71) au moins rigide à la traction pouvant être couplé à un chariot distal (32') du bâti de capote (16) et déplaçant le chariot distal (32') vers l'avant et/ou vers l'arrière en fonction d'une direction d'actionnement de l'entraînement (70),
l'entraînement (70) comprenant un premier corps de rotation entraîné (73),
l'entraînement (70) comprenant un deuxième corps de rotation (74), et le premier corps de rotation (73) et le deuxième corps de rotation (74) étant disposés de manière adjacente l'un à l'autre et formant un dispositif d'entraînement (75),
**caractérisée en ce**
**que** l'au moins un élément de traction (71) au moins rigide à la traction est enroulé plusieurs fois en alternance à environ 180 degrés autour du premier corps de rotation (73) et à environ 180 degrés autour du deuxième corps de rotation (74).

2. Structure ouvrable selon la revendication 1, **caractérisée en ce que** l'au moins un élément de traction (71) au moins rigide à la traction est enroulé au moins trois fois en alternance à environ 180 degrés autour du premier corps de rotation (73) et à environ 180 degrés autour autour du deuxième corps de rotation (74).

3. Structure ouvrable selon la revendication 1 ou 2, **caractérisée en ce que** le deuxième corps de rotation (74) est entraîné par l'au moins un élément de traction (71) au moins rigide à la traction, que le premier corps de rotation (73) peut être mis en rotation par un moteur (72) de l'entraînement (70), et que l'au moins un élément de traction (71) au moins rigide à la traction est conçu comme un élément de traction (71) fermé sans fin.

4. Structure ouvrable selon l'une des revendications précédentes, **caractérisée en ce que** le premier corps de rotation est réalisé sous forme de cylindre (73) et présente des rainures périphériques (73b) dans lesquelles est guidé l'au moins un élément de traction (71) au moins rigide à la traction.

5. Structure ouvrable selon la revendication 4, **caractérisée en ce que** des entretoises radiales (73c) sont disposées entre des rainures périphériques (73b) voisines, qui empêchent l'au moins un élément de traction (71) au moins rigide à la traction de quitter la rainure périphérique respective (73b).

6. Structure ouvrable selon l'une des revendications précédentes, **caractérisée en ce que** le premier corps de rotation (73) et le deuxième corps de rotation (74) présentent des axes parallèles (730; 740).

7. Structure ouvrable selon l'une des revendications précédentes, **caractérisée en ce que** le premier corps de rotation (73) et/ou le deuxième corps de rotation (74) présentent un écartement mutuel variable pour ajuster la longueur de l'élément de traction (71) au moins rigide à la traction.

8. Structure ouvrable selon l'une des revendications précédentes, **caractérisée en ce que** le deuxième corps de rotation (74) peut être déplacé en direction du premier corps de rotation (73), et qu'un déplacement du deuxième corps de rotation (74) permet de réduire la tension de l'au moins un élément de traction (71) au moins rigide à la traction.

9. Structure ouvrable selon l'une des revendications précédentes, **caractérisée en ce qu'**un élément de ressort est disposé entre le premier corps de rotation (73) et le deuxième corps de rotation (74), lequel élément de ressort sollicite le deuxième corps de rotation (74) dans une direction éloignée du premier corps de rotation (73) et obtient ainsi une tension de l'au moins un élément de traction (71) au moins rigide à la traction.

10. Structure ouvrable selon l'une des revendications précédentes, **caractérisée en ce qu'**au moins le deuxième corps de rotation (74) comprend une pluralité de sections cylindriques en forme de disque (174) pouvant tourner indépendamment, la section cylindrique en forme de disque (174) étant entourée par l'au moins un élément de traction (71) au moins rigide à la traction.

11. Structure ouvrable selon l'une des revendications précédentes, **caractérisée en ce**
**qu'**il est prévu une goupille de blocage (80a) qui peut être avancée contre une partie du premier corps de rotation (73),
**que** la goupille de blocage (80a) empêche le premier corps de rotation (73) de tourner et bloque ainsi le chariot (32') même dans un état non entraîné de l'entraînement (70), et
**que** la goupille de blocage (80a) est chargée par un élément de ressort dans la position avancée, et que la goupille de blocage (80a) peut être retirée de la position avancée contre la charge de l'élément de ressort par un dispositif de levage (80).

12. Structure ouvrable selon la revendication 11, **caractérisée en ce que** la goupille de blocage (80a) bloque un premier corps de rotation entraîné (73) de l'entraînement (70), et que la goupille de blocage (80a) peut être avancée dans un évidement (73e) du premier corps de rotation (73).

13. Structure ouvrable selon l'une des revendications 11 à 12, **caractérisée en ce que**, pour libérer la goupille de blocage (80a), l'entraînement (70) peut d'abord être déplacé dans le sens opposé au sens de déplacement prévu, et que la goupille de blocage (80a) est ainsi déchargée au moins temporairement afin de pouvoir retirer la goupille de blocage (80a).

14. Structure ouvrable selon l'une des revendications précédentes, **caractérisée en ce**
**qu'**il est prévu une première valeur de seuil pour une consommation de courant de l'entraînement (70), qui limite la puissance consommée de l'entraînement (70) en fonctionnement ordinaire, et
**qu'**une puissance consommée de l'entraînement (70) supérieure à la première valeur de seuil est autorisée pendant la durée d'une première période pour faire face à des pointes de travail.

15. Structure ouvrable selon la revendication 14, **caractérisée en ce qu'**un intervalle de temps minimum est prévu entre deux premières périodes consécutives pendant lesquelles une puissance consommée dépassant la première valeur de seuil est autorisée, intervalle de temps minimum pendant lequel la consommation de puissance de l'entraînement (70) est limitée en fonctionnement normal, et que l'intervalle de temps minimum a une durée au moins égale à celle de la première période.

16. Structure ouvrable selon l'une des revendications précédentes, **caractérisée en ce que** l'au moins un élément de traction (71) au moins rigide à la traction est relié à deux chariots distaux (32') qui sont raccordés à un longeron commun (34) et entraîne simultanément les deux chariots distaux (32').
